# EUROPEAN PATENT SPECIFICATION

(11) **EP 1 983 698 B1**
(45) Date of publication and mention of the grant of the patent: **13.10.2010**
(21) Application number: 07008148.4
(22) Date of filing: 20.04.2007
(51) Int. Cl.: H04W 28/06, H04L 1/18

(54) **Improved transmission scheme of protocol data units during a procedure that comprises the reset of the protocol layer**
Verbessertes Übertragungsschema für Protokolldateneinheiten während eines Vorgangs mit Zurücksetzung der Protokollschicht
Schéma de transmission amélioré d'unités de données de protocole pendant une procédure qui comprend la réinitialisation de la couche de protocole

(43) Date of publication of application: 22.10.2008
(73) Proprietor: Panasonic Corporation, Kadoma-shi Osaka 571-8501 (JP)
(72) Inventor: Petrovic, Dragan, 63225 Langen (DE); Aoyama, Takahisa c/o Matsushita Electric Industria Co Ltd, Osaka 540-6319 (JP)
(74) Representative: Grünecker, Kinkeldey, Stockmair & Schwanhäusser Anwaltssozietät

(56) References cited:
- WO-A-01/05121
- US-A1- 2003 210 714
- US-A1- 2004 203 623

## Description

### FIELD OF THE INVENTION

The invention relates to a method for transmitting data via a protocol sublayer of the mobile node during a procedure that comprises the re-establishment of the protocol sublayer. The invention provides different method steps so as to enable the UE to efficiently re-transmit those protocol data units that are still in the transmission buffer of the protocol sublayer at the time the procedure is detected by the MN. Furthermore, the invention relates to a mobile node and a base station which participate in the invention.

### TECHNICAL BACKGROUND

W-CDMA (Wideband Code Division Multiple Access) is a radio interface for IMT-2000 systems (International Mobile Telecommunication system), which was standardized for use as the 3rd generation wireless mobile telecommunication system. It provides a variety of services such as voice services and multimedia mobile communication services in a flexible and efficient way. The standardization bodies in Japan, Europe, USA and other countries have jointly organized a project called the 3rd Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4, Release 5 and Release 6.

Recently, the 3GPP has begun considering the next major step or evolution of the 3G standard to ensure the long-term competitiveness of 3G. The 3GPP recently launched a study item "Evolved UTRA and UTRAN" better known as "Long Term Evolution (LTE)". The study will investigate means of achieving major leaps in performance in order to improve service provisioning, and to reduce user and operator costs. It is generally assumed that Internet Protocols (IP) will be used in mobility control, and that all future services will be IP-based. Therefore, the focus of the evolution is on enhancements to the packet-switched (PS) domain of legacy UMTS systems.

The main objectives of the evolution are to further improve service provisioning, and reduce user and operator costs, as already mentioned. More specifically, some key performance, capability and deployment requirements for the long-term evolution (LTE) are inter alia:
- significantly higher data rates compared to HSDPA and HSUPA (envisioned are target peak data rates of more than 100Mbps over the downlink and 50Mbps over the uplink),
- high data rates with wide-area coverage,
- significantly reduced latency in the user plane in the interest of improving the performance of higher layer protocols (for example, TCP) as well as reducing the delay associated with control plane procedures (for instance, session setup), and
- stand-alone system operation in spectrum allocations of different sizes ranging from 1.25 MHz to 20 MHz.

One other deployment-related requirement for the long-term evolution study is to allow for a smooth migration to these technologies.

### Current and LTE UTRAN Architecture

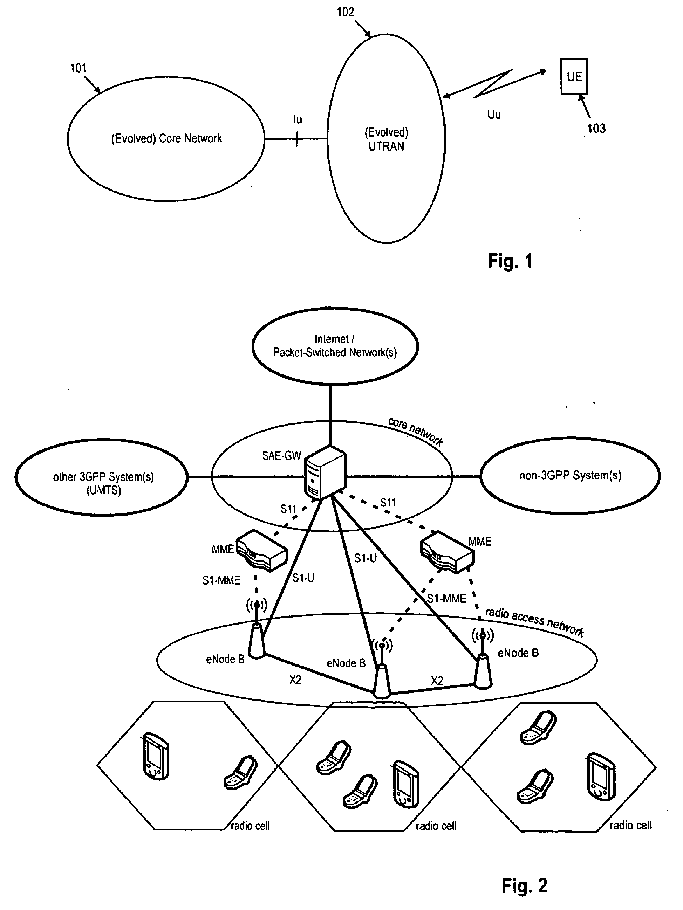

The high level Release 99/4/5/6 architecture of the Universal Mobile Telecommunication System (UMTS) is shown in Fig. 1 (see 3GPP TS 25.401: "UTRAN Overall Description", available from http://www.3gpp.org). The UMTS system consists of a number of network elements each having a defined function. Though the network elements are defined by their respective function, a similar physical implementation of the network elements may be common but not mandatory.

The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of CN/UTRAN and UTRAN/UE are defined by open interfaces (lu, Uu respectively). It should be noted that the UMTS system is modular, and it is therefore possible to have several network elements of the same type.

Fig. 2 illustrates an exemplary overview of a 3GPP LTE mobile communication network. The network consists of different network entities that are functionally grouped into the Core Network (CN), the Radio Access Network (RAN) and the User Equipments (UEs) or mobile terminals. The RAN is responsible for handling all radio-related functionality inter alia including scheduling of radio resources. The CN may be responsible for routing calls and data connections to external networks.

The LTE network is a "two node architecture" with respect to the user data plane, consisting of the so called SAE Gateway (SAE-GW) and enhanced Node Bs (also referred to as eNode Bs or eNBs). On the control plane, the mobility management entity (MME) is also present in addition to the above mentioned entities, and handles the non-access stratum (NAS) signaling and other related control signaling, like authentication and mobility management. The MME and SAE-GW will handle CN functions, such as Inter CN node signaling for mobility between 3GPP access networks, Idle mode UE Tracking and Reachability, routing calls and data connections to external networks. The eNode Bs may handle functions as for example header compression, ciphering/integrity protection, Radio Resource Control (RRC), segmentation/concatenation, scheduling and allocation of resources, multiplexing and physical layer functions.

A mobile communication network is typically modular, and it is therefore possible to have several network entities of the same type. The interconnections of network elements are defined by open interfaces. UEs can connect to an eNode B via the air interface denoted as Uu interface. The eNode Bs may have a connection to an SAE-GW via the so-called S1-U interface. The eNode Bs are themselves interconnected via the so-called X2 interface.

Both 3GPP and Non-3GPP integration may be handled via the SAE-GW's interface to the external packet data networks (e.g. Internet).

As already indicated above, in the exemplary network architecture of Fig. 2, it is assumed that the ownership of the cell resources is handled in each eNode B. Having the cell resource ownership outside the SAE-GW makes it possible to support pooling of SAE-GW (of both CP / UP flows), allowing one eNode B to be connected to several SAE-GWs for different terminals (thus avoiding a single point of failure).

It should be noted that the above considerations are only an example, representing the current developments in the standard committees. There are continuous changes in the standard that might not coincide with the above exemplary system. However, a skilled reader is able to apply the principles of the invention to the changed aspects of future systems.

### General Overview of the OSI layer

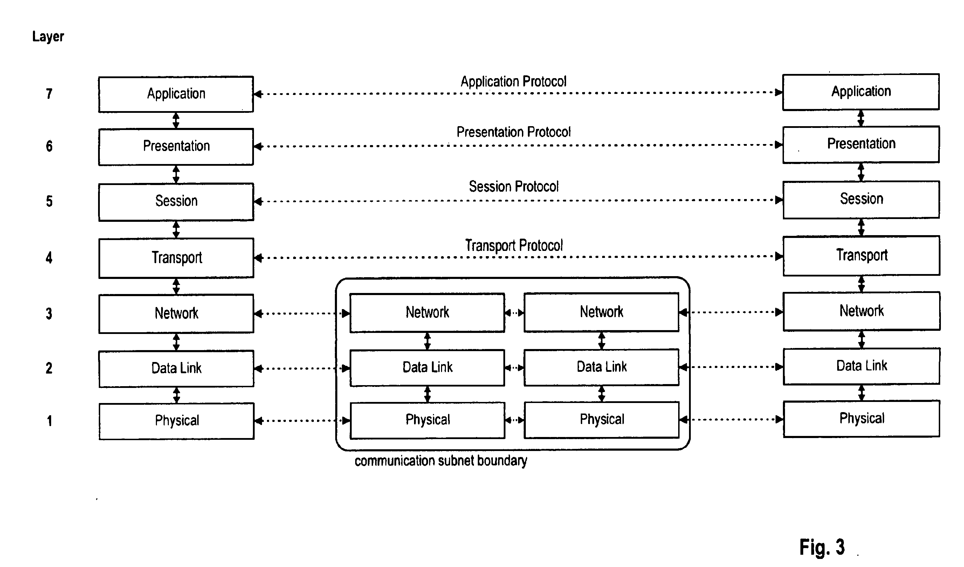

Fig. 3 provides a brief overview on the OSI model on which the further discussion of the LTE architecture is based and based on which also the invention will be discussed herein.

The Open Systems Interconnection Reference Model (OSI Model or OSI Reference Model) is a layered abstract description for communication and computer network protocol design. The OSI model divides the functions of a system into a series of layers. Each layer has the property that it only uses the functions of the layer below, and only exports functionality to the layer above. A system that implements protocol behavior consisting of a series of these layers is known as a 'protocol stack' or 'stack'. Its main feature is in the junction between layers which dictates the specifications on how one layer interacts with another. This means that a layer written by one manufacturer can operate with a layer from another. For our purpose, only the first three layers will be described in more detail below.

The physical layer or layer 1's main purpose is the transfer of information (bits) over a specific physical medium (e.g. coaxial cables, twisted pairs, optical fibers, air interface, etc.). It converts or modulates data into signals (or symbols) that are transmitted over a communication channel.

The purpose of the data link layer (or Layer 2) is to shape the information flow in a way compatible with the specific physical layer by breaking up the input data into data frames (Segmentation And Re-assembly (SAR) functions). Furthermore it may detect and correct potential transmission errors by requesting a retransmission of a lost frame. It typically provides an addressing mechanism and may offer flow control algorithms in order to align the data rate with the receiver capacity. If a shared medium is concurrently used by multiple transmitters and receivers, the data link layer typically offers mechanisms to regulate and control access to the physical medium.

As there are numerous functions offered by the data link layer, the data link layer is often subdivided into sublayers (e.g. RLC and MAC sublayers in UMTS). Typical examples of Layer 2 protocols are PPP/HDLC, ATM, frame relay for fixed line networks and RLC, LLC or MAC for wireless systems.

The network layer or Layer 3 provides the functional and procedural means for transferring variable length packets from a source to a destination via one or more networks while maintaining the quality of service requested by the transport layer. Typically, the network layer's main purposes are inter alia to perform network routing, network fragmentation and congestion control functions. The main examples of network layer protocols are the IP Internet Protocol or X.25.

With respect to Layers 4 to 7 it should be noted that depending on the application and service it is sometimes difficult to attribute an application or service to a specific layer of the OSI model since applications and services operating above Layer 3 often implement a variety of functions that are to be attributed to different layers of the OSI model. Therefore, especially in TCP(UDP)/IP based networks, Layer 4 and above is sometimes combined and forms a so-called "application layer".

More information on OSI layer model can be for example found in the textbook "Computer Networks", by Andrew S. Tanenbaum, fourth edition, 2002, Prentice Hall PTR, chapter 1.4 incorporated herein by reference.

### Layer structure and Data Flow in LTE

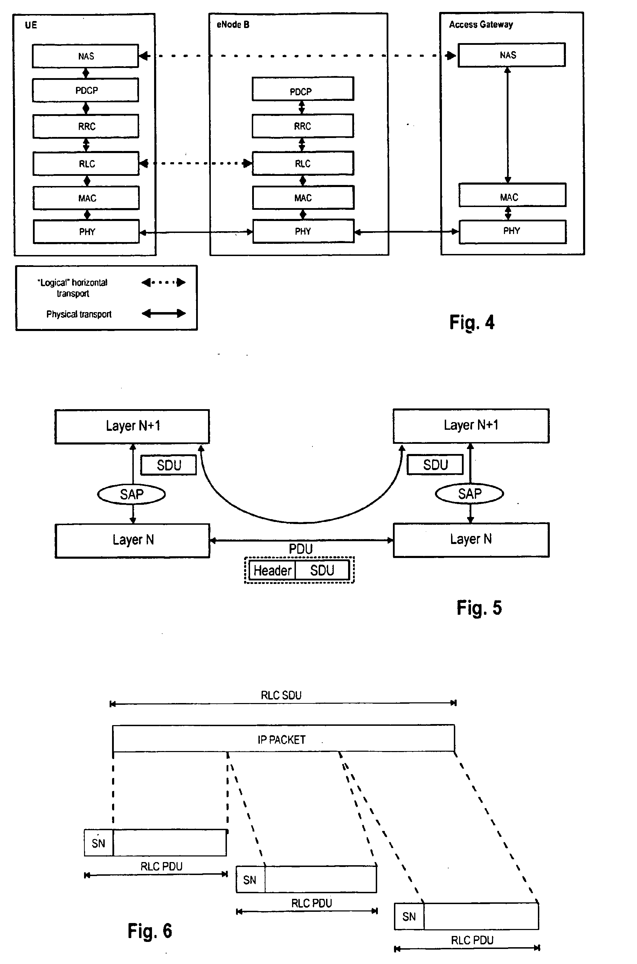

Fig. 4 shows an exemplary user-plane protocol stack in an LTE-based UTRAN. Layer 2 may be split in Medium Access Control (MAC), Radio Link Control (RLC) and Packet Data Convergence Protocol (PDCP), wherein the RLC and the PDCP sublayers are terminated in eNode B at network side. The NAS layer is terminated in the Access Gateway at network side. The S1-C transport layer between the aGW and the eNode B forms the Transport Network Layer together with a MAC and a Physical layer specifically adapted to the transport medium between the entities.

The major part of the control signaling between a mobile node (MN or also referred to as User Equipment UE) and the Core Network is done by Radio Resource Control (RRC) messages. The RRC protocol is located in Layer 3 and provides functions for UE specific signaling, paging of idle mode UEs and system information broadcast. The RRC layer also supports retransmission function to assure the correct transmission of control information from higher layers.

In summary, Fig. 4 shows the radio interface protocol stack architecture for E-UTRA Control Plane. An explanation of the content of the relevant functions is given in the proceeding text.
- RLC and MAC sublayers (terminated in eNB on the network side) perform the same functions as for the user plane;
- RRC (terminated in eNB on the network side) performs the functions listed below, e.g.:
   - Broadcast;
   - Paging;
   - RRC connection management;
   - RB control;
   - Mobility functions; and
   - UE measurement reporting and control.
- PDCP sublayer (terminated in eNB on the network side) performs for the control plane the functions listed below, e.g.:
   - Integrity Protection; and
   - Ciphering.
- NAS (terminated in aGW on the network side) performs among other things:
   - SAE bearer management;
   - Authentication;
   - Idle mode mobility handling;
   - Paging origination in LTE_IDLE; and
   - Security control for the signaling between aGW and UE, and for the user plane.

### Layer Services and Data Exchange

In the following the terms service data unit (SDU) and protocol data unit (PDU) as used herein are defined in connection with Fig. 5. In order to formally describe in a generic way the exchange of packets between layers in the OSI model, SDU and PDU entities have been introduced. An SDU is a unit of information (data/information block) transmitted from a protocol at the layer N+1 that requests a service from a protocol located at layer N via a so-called service access point (SAP). A PDU is a unit of information exchanged between peer processes at the transmitter and at the receiver of the same protocol located at the same layer N.

A PDU is generally formed by a payload part consisting of the processed version of the received SDU(s) preceded by a layer N specific header and optionally terminated by a trailer. Since there is no direct physical connection (except for Layer 1) between these peer processes, a PDU is forwarded to the layer N-1 for processing. Therefore a layer N PDU is from a layer N-1 point of view an SDU.

### Transmitter Segmentation and Receiver re-assembly

Referring back to Fig. 4, a UE may for example include means to convert voice signals from the user to voice frames and subsequently transmits the voice frames via the IP protocol to another UE. In the UE the RLC layer segments, concatenates or pads RLC SDUs received from a higher layer (PDCP) to a size suitable for transmission on a radio channel. That is, the RLC layer constructs an RLC PDU suitable for transmission on the radio channel by inserting information on segmentation/concatenation/padding and a sequence number into the resulting data, as illustrated in Fig. 6, and provides the RLC PDU to the lower layers (MAC and PHY). In more detail, the RLC layer of the transmitter receives an RLC SDU of a particular size, e.g. a 100 byte IP packet from the higher layer. If a data size transmittable on the radio channel is 40 bytes, the RLC layer segments the RLC SDU into three RLC PDUs. Each RLC PDU has 40 bytes and also includes an RLC header. The RLC header includes amongst other things a Sequence Number (SN). The SN increases continually by 1 for every RLC PDU. In this case, the SNs indicate the sequence of the three RLC PDUs

In the receiver the RLC layer recovers data by interpreting the sequence number and segmentation/concatenation/padding information of an RLC PDU received from a lower layer, and re-constructs an RLC SDU by concatenating or segmenting the data in correspondence with the operation of the transmitter. The right order for combining the RLC PDUs to the corresponding RLC SDU is given by the SN. The reconstructed RLC SDU is then provided to a higher layer.

The basic scheduling behavior of a UE for transmitting data in the uplink direction is mainly controlled by an uplink rate control function in the UE, which manages the sharing of uplink resources between radio bearers. The RRC layer controls the uplink rate control function by giving each bearer a priority and a Prioritized Bit Rate (PBR). In addition, the RRC layer configures a Maximum BitRate (MBR) for each bearer with a Guaranteed BitRate (GBR). Also, an Averaged Maximum possible BitRate (AMBR) is set-up for each group of radio bearers with a Non-GBR. It should be noted that the values used may not be related to the ones signaled via S1 to the eNB.

The uplink rate control function ensures that the UE serves its radio bearer(s) in the following sequence:
1. All the radio bearer(s) in decreasing priority order up to the PBR;
2. All the radio bearer(s) in decreasing priority order for the remaining resources assigned by the previous grant.

Additionally, the uplink rate control function ensures that the MBR and AMBR are not exceeded. In case the PBRs are all set to zero, the first step is skipped, and the radio bearer(s) are served in strict priority order, wherein the UE maximizes the transmission of higher priority data.

US 2004/0203623 A1 discloses a scheme to retransmit radio resource control messages during a radio link control protocol reset in a wireless communications system. The US application identifies the problem that if an RLC reset occurs before receiving positive acknowledgements of all RLC PDUs transmitted, the PDUs not correctly received cannot be transmitted after an RLC reset takes place, thereby deceasing performance of the communications system. By informing the RRC layer of the RLC reset, the RRC can retransmit those messages which were submitted to the RRC before the RLC reset and might not be received correctly by the peer RRC due to their RLC reset. In this way, data loss and delays associated with the conventional method are avoided and system performance in wireless communications is improved.

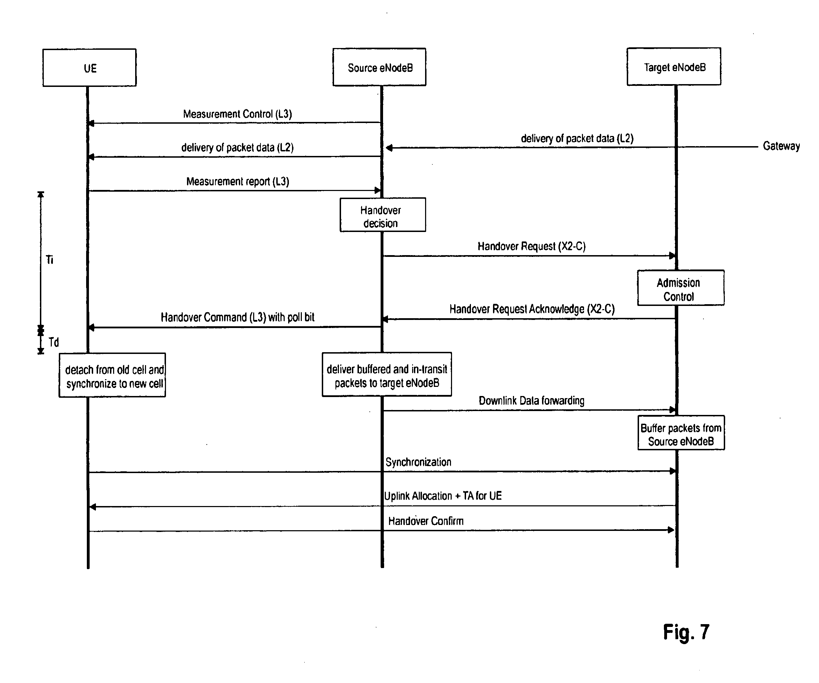

Fig. 7 shows a signal diagram for a handover procedure of the mobile node from a Source eNode B to a Target eNode B. It is assumed that the UE is currently attached to the Source eNB and exchanges data with another UE via a gateway (not shown). The UE has received a Measurement Control message from the Source eNB in order to configure the measurements which are to be performed constantly by the mobile node. E.g. the Measurement Control message may indicate which kind of measurements or the particular reporting modality (e.g. periodic or event based). Correspondingly, the UE performs the measurements as indicated by the Source eNB and reports thereon to the Source eNB. The Measurement reports are sent by the UE according to rules set by i.e. system information, specification, etc. This measurement information may then be used by the Source eNode B to decide whether to perform a handover for the UE to another network, i.e. another eNB.

In such a case when the Source eNB decides for a handover, a handover request message is transmitted to the Target eNB passing necessary information to prepare for the HO at the target side (UE X2 signalling context reference at Source eNB, UE S1 EPC signalling context reference, target cell ID, RRC context, SAE bearer context). Furthermore, the comprised UE X2 / UE S1 signalling references enable the target eNB to address the Source eNB.

Admission Control may be performed by the Target eNB dependent on the received SAE bearer QoS information to increase the likelihood of a successful HO, if the resources can be granted by Target eNB. The Target eNB configures the required resources according to the received SAE bearer QoS information and reserves a C-RNTI (Cell Radio Network Temporary Identifier), which provides a unique UE identification at the cell level identifying the RRC Connection. In case the UE is admitted by the Target eNB in the target network, the Target eNB prepares the HO with L1/L2 and sends the HANDOVER REQUEST ACKNOWLEDGE to the source eNB over the X2-c interface. The HANDOVER REQUEST ACKNOWLEDGE message includes a transparent container to be sent to the UE as part of the Handover Command. The Poll bit is used by the sending entity of the RLC protocol to request sending of transmission feedback from the receiving entity. When the poll bit is set to '1', the feedback is delivered to the receiving entity. In this case, if RLC acknowledged mode is used for delivery of Handover Command message, successful transmission of all the packets contained in this message is ensured. The container may include the new C-RNTI, possibly some other parameters i.e. access parameters, SIBs, etc. The HANDOVER REQUEST ACKNOWLEDGE message may also include RNL(Radio Network Layer)/TNL(Transport Network Layer) information for the forwarding tunnels, if necessary.

The Source eNB generates the HANDOVER COMMAND (RRC message) towards the UE. The HANDOVER COMMAND includes the transparent container, which has been received from the Target eNB. The Source eNodeB performs the necessary integrity protection and ciphering of the message. The UE receives the HANDOVER COMMAND with necessary parameters (i.e. new C-RNTI, possible starting time, target eNB SIBs, etc) and is commanded by the Source eNB to perform the HO. It is probable that the UE needs to acknowledge the reception of the HANDOVER COMMAND with an RLC acknowledgment procedure (not shown). After expiry of the starting time defined in HANDOVER COMMAND, UE performs synchronisation to Target eNB and then starts acquiring uplink timing advance. Correspondingly, the network responds with UL allocation and timing advance.

When the UE has successfully accessed the target cell, the UE sends the HANDOVER CONFIRM message (C-RNTI) to the Target eNB to indicate that the handover procedure is completed for the UE. The Target eNB verifies the C-RNTI sent in the HANDOVER CONFIRM message. Accordingly, the Gateway switches the downlink data path to the target side and can release any U-plane/TNL resources towards the Source eNB. Furthermore, by sending RELEASE RESOURCE, the Target eNB informs the success of the Handover to the Source eNB and triggers the release of resources (not shown). Upon reception of the RELEASE RESOURCE message, the Source eNB can release radio and C-plane related resources associated to the UE context.

At handover, the unit that is used for forwarding packets from Source eNode B to Target eNode B is a PDCP PDU (or PDCP SDU), since it is assumed that there is no RLC context transfer between Source and Target eNode B. That is, after receiving RLC PDUs from the UE, the Source eNB combines the RLC PDUs to RLC SDUs, wherein those RLC SDUs may be forwarded to the Target eNB during handover procedure. Therefore, if the Source eNB has received RLC PDUs, which it has not yet reassembled to RLC SDUs (i.e. PDCP PDUs) for whatever reasons, those RLC PDUs cannot not be transferred to the Target eNB and are hence deleted from the Source eNB and thus lost. Instead, those deleted RLC PDUs (i.e. the corresponding RLC SDUs) have to be transmitted again, this time however to the Target eNB. Apparently, this behaviour is not efficient from radio transmission perspective, since more bits have to be transmitted overall, due to the incomplete reassembly of RLC SDUs in the Source eNB at the time of handover.

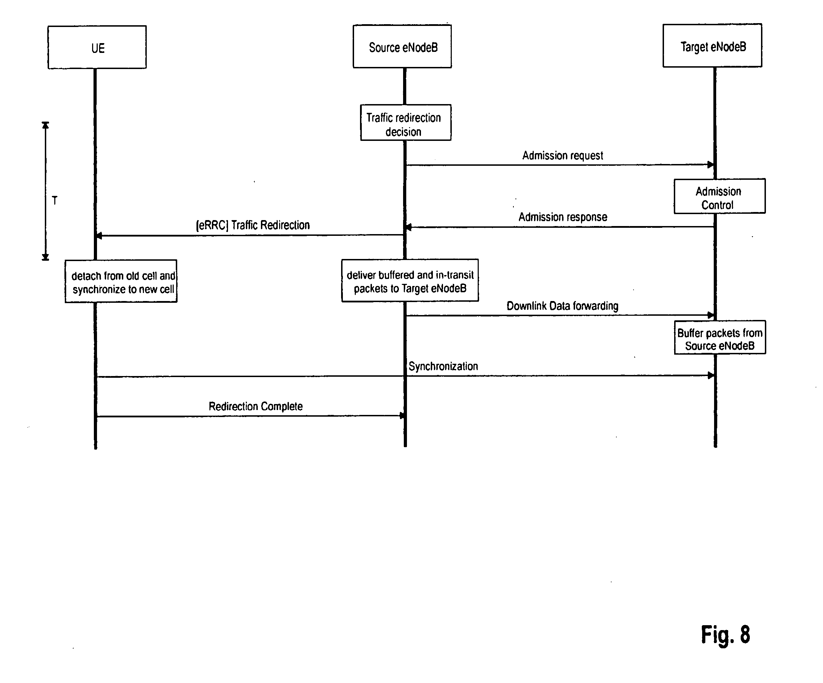

Similarly, the Traffic Redirection Procedure of Fig. 8 also has the above mentioned problem of inefficient radio transmissions due to incomplete reassembly of RLC SDUs in the Source eNB. A brief summary of the Traffic Redirection Procedure is given below. Traffic load balancing should be one of the main drivers for mobility control in LTE systems. Traffic load balancing is essential because of the shared channel nature in the mobile communication systems. That is, the user throughput decreases as the number of active UEs in the cell increases, and the loading directly impacts on the user perception. This requirement practically translates into directing a terminal from a Source to a Target eNB when the traffic load under Source eNB is unacceptably high while the traffic load under Target eNB allows the positive decision of admission control for at least one terminal. Though the traffic redirection procedure is triggered by load criterion, which is different from the radio channel quality triggering the above discussed Handover procedure, the problem of loss of segmented RLC PDUs which have not been fully reassembled into RLC SDUs in the Source eNB is identical to the described problem for the Handover procedure according to Fig. 7.

The decision to perform the traffic redirection procedure is done by the Source eNB, which has the necessary information about the traffic load in the network area controlled by itself. Provided that the traffic load gets too high in the source network, the Source eNB determines that the traffic redirection procedure is necessary and transmits an admission request to the Target eNB, also comprising necessary information to prepare for the HO at the target side. The Target eNB in turn decides whether an additional UE can be served in the target network without exceeding the available system resources. An admission response is generated and transmitted to the Source eNB, at the same time preparing the HO and configuring corresponding resources. The positive decision for traffic redirection is informed to the UE by providing an [eRRC] Traffic Redirection Command to the UE.

Consequently, the UE detaches from the source cell and starts to synchronize to the new target cell. The Source eNB forwards outstanding packets to the Target eNB, that is, already reassembled uplink RLC SDUs are forwarded. Those RLC PDUs which the Source eNB could not combine to RLC SDUs, due e.g. to missing RLC PDUs belonging to the same RLC SDU, have to be discarded and need to be resent in the target cell.

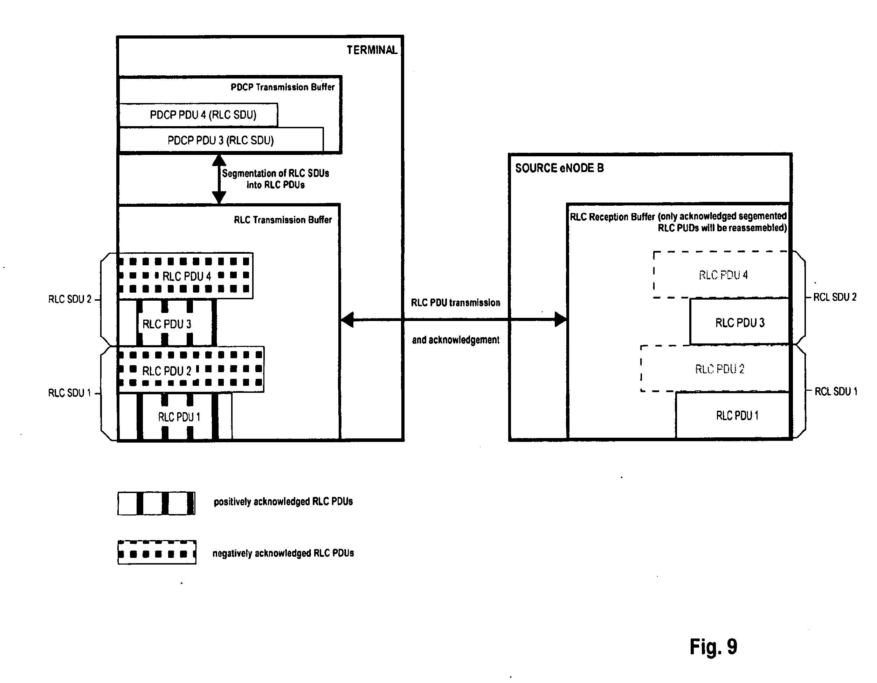

This will be illustrated in more detail with reference to Fig. 9, which shows the content of the transmission/reception buffers of the UE and the Source eNB at the time of handover or traffic redirection. The PDCP PDUs (i.e. RLC SDUs) are segmented in the UE into RLC PDUs depending on the radio condition, wherein the size of the RLC PDUs is thus flexible. As already mentioned, it is assumed that no RLC context transfer is done between the Source and Target eNB. The PDCP transmission buffer currently has PDCP PDU 3 and 4, which means that PDCP PDUs 1 and 2 have already been transmitted to the RLC layer. Indeed, the RLC transmission buffer holds RLC PDUs 1-4, wherein PDCP PDU 1 (RLC SDU 1) has been segmented into RLC PDUs 1 and 2, and PDCP PDU 2 (RLC SDU 2) into RLC PDUs 3 and 4. RLC PDUs 1 to 4 have been transmitted to the Source eNB, however only RLC PDUs 1 and 3 are correctly received. It is assumed for the example that RLC PDUs 2 and 4 are lost over the air interface due to channel problems, like interference, etc.

Therefore, Source eNB is unable to reassemble any of the two RLC SDUs to which the RLC PDUs 1 to 4 belong, since respectively one RLC PDU is missing to complete the corresponding RLC SDU. For instance, RLC SDU 1 needs both RLC PDU 1 and 2. In case that in this moment a handover or redirection procedure is performed, RLC PDUs 1 and 3 would have to be deleted from the reception buffer of the Source eNB since only RLC SDUs (PDCP PDUs) are forwarded from the Source eNB to the Target eNB. Correspondingly, RLC PDUs 1 to 4 are transmitted from the UE to the Target eNB after having performed the handover to the target cell. Hence, even though real loss in the handover region consists of RLC PDU 2 and 4, due to the deletion of all RLC PDUs belonging to incompletely received RLC SDUs, the effective loss will amount to RLC PDUs 1 to 4.

### SUMMARY OF THE INVENTION

An object of the invention is to suggest a mechanism for overcoming at least one of the problems outlined above. A more specific object of the invention is to improve the transmission of data from the mobile node to the access network during a procedure in which the protocol sublayer, used for the transmission of the data, is reset.

A more specific object of the invention is to enable the radio resource efficient transmission of protocol data units of a protocol layer from the mobile node to the source base station during a handover of the mobile node without introducing additional delays.

At least one of the objects is solved by the subject-matter of the independent claims. Advantageous embodiments of the invention are subject-matters of the dependent claims.

According to an aspect of the invention, the mobile node is enabled to realize in advance that the protocol layer, which is being used to transmit data to the network, is going to be reset. Thus, the mobile node has enough time to empty the transmission buffer of the protocol sublayer before the actual reset of same takes place. As a result, no duplicate transmissions of protocol data units before and after the reset of the protocol sublayer take place.

In more detail, the segmentation of protocol data units is immediately stopped upon the UE anticipates that the protocol sublayer is to be re-established. At that time a particular number of service data units have been segmented into protocol data units and input to a transmission buffer of the protocol sublayer. Also, the transmission buffer comprises protocol data units that have not yet been transmitted to the access network, protocol data units that have been transmitted to the access network, but which have not been acknowledged by the access network. Finally, there are protocol data units in the transmission buffer of the mobile node that have been correctly transmitted to the access network and thus the mobile node has already received an acknowledgement from the access network.

The transmission buffer is emptied by prioritizing the transmission of those protocol data units that have been already transmitted, but not acknowledged yet. More specifically, those protocol data units that have been correctly transmitted to the access network (e.g. base station) and that belong to the same service data unit as the unacknowledged protocol data units cannot be combined into the corresponding service data unit, because of the missing/incorrectly received protocol data units. There might also be the case where some PDUs of one SDU have been already transmitted whereas other PDUs of the same SDU have not been transmitted at the time of the detection. Therefore, it is important to provide the Source eNB with the respective PDUs so as to finish the re-assembly of the SDUs. This approach maximizes the radio efficiency of the data transmissions, because the service data units may be reassembled on the receiving side, and no protocol data units have been transmitted in vain.

Another aspect of the invention, that may be advantageously combined with the aspect of prioritizing the transmission of the unacknowledged protocol data units, is that after said transmission and provided there are sufficient time and resources available, those protocol data units in the transmission buffer of the mobile node, that have not been previously transmitted in the uplink, may now be transmitted to the receiving side before the reset of the protocol sublayer.

Yet another aspect of the invention relates to the fact that the early detection of the upcoming command to reset the protocol sublayer may be triggered internally or externally. For instance, in relation to a handover procedure which implies the reestablishment of the RLC layer, the UE may internally notice that the measurement report transmitted to the Source eNB will trigger a handover. The reestablishment of the RLC protocol is used in the following in an equal form as the reset for this RLC protocol. On the other hand, there may be a notification from the Source eNB immediately after the handover decision in the Source eNB so as to inform the UE about the handover decision as soon as possible.

Similarly, for a traffic redirection procedure it is possible to notify the UE about the positive decision by introducing a new pre-traffic redirection message, which is provided to the UE immediately after the actual decision in the Source eNB.

One embodiment of the invention provides a method for transmitting data from a mobile node via a protocol sublayer of the mobile node to an access network of a mobile communications system. The transmission is done during a procedure comprising a reset of the protocol sublayer of the mobile node. Upon detecting at the mobile node in advance the upcoming command to perform the procedure comprising the reset of the protocol sublayer of the mobile node, at first, the segmentation of service data units of the protocol sublayer into protocol data units of the protocol sublayer is stopped. Also, unacknowledged protocol data units are re-transmitted by the protocol sublayer of the mobile node to the access network.

According to an another embodiment of the invention, the re-transmission of unacknowledged protocol data units to the access network is continued after the reception of the command to perform the procedure until the mobile node changes its attachment to the access network. At least one advantage hereby is that the mobile node has more time to accomplish the task of re-transmitting all unacknowledged protocol data units, that have not been reassembled yet on the receiving side.

In a more advantageous embodiment of the invention, before detecting the upcoming command to perform the procedure, the service data units are segmented into protocol data units of the protocol sublayer, upon receiving the service data units from a second protocol sublayer in the protocol sublayer and then the segmented protocol data units of the protocol sublayer are input into a transmission buffer of the protocol sublayer. Moreover, the re-transmission comprises that those segmented protocol data units in the transmission buffer of the protocol sublayer are re-transmitted, which have been transmitted to the access network but have not been acknowledged by the access network. One advantage thereof is that, since those unacknowledged protocol data units belong to a particular service data unit, which has to be reassembled in the receiving side, the service data units in the receiving side can be generated after having received the unacknowledged protocol data units. This is also very resource efficient.

A more specific embodiment of the invention relates to the transmission buffer of the protocol sublayer of the mobile node further which also comprises segmented protocol data units which have not been transmitted to the access network at the time of detecting the upcoming command to perform the procedure. After re-transmitting all the unacknowledged protocol data units in the transmission buffer to the access network, the protocol sublayer transmits the segmented protocol data units to the access network, which have not been transmitted to the access network. The prioritization allows to efficiently use the available resources for the more important protocol data units, which are those which belong to service data units that could not been reassembled in the receiving side, because of the wrongly received protocol data units.

According to a different embodiment of the invention, the protocol sublayer is a radio link control sublayer. Furthermore, the transmission of protocol data units of the radio link control sublayer, which have been transmitted to the access network but have not been acknowledged by the access network, are prioritized over the transmission of protocol data units of the radio link control sublayer, which have not been transmitted to the access network at the time of detecting the upcoming command to perform the procedure. Similar as before, the prioritization enables the mobile node to efficiently use its resources.

Referring now to a more advantageous embodiment of the invention, the mobile node waits for a pre-determined time to receive the command to perform the procedure, upon detecting the upcoming command to perform the procedure. In case the pre-determined time elapses before the mobile node receives the command to perform the procedure comprising the reset of the protocol sublayer of the mobile node, the mobile nodes re-starts the segmentation of service data units of the protocol sublayer into protocol data units of the protocol sublayer. The pre-determined time that is used can be freely set by the operator, and allows thus a flexible implementation of the embodiment of the invention.

According to another embodiment of the invention, the protocol sublayer of the mobile node has limited system resources for re-transmitting the unacknowledged protocol data units of the protocol sublayer to the access network. In case the system resources of the mobile node are not sufficient to re-transmit the unacknowledged protocol data units, the mobile node requests additional system resources from the access network and receives from the access network information on the additional system resources.

Consequently, the additional system resources are utilized to re-transmit the unacknowledged protocol data units to the access network. Though the mobile node may not have initially enough resources, the embodiment of the invention allows the mobile node to ask for additional resources in order to fulfill the re-transmission of unacknowledged protocol data units.

In a more advantageous embodiment of the invention, the mobile node determines the amount of data of the unacknowledged protocol data units of the protocol sublayer. Then, a request message is transmitted to the access network for requesting additional system resources, comprising information on the determined amount of data of the unacknowledged protocol data units.

In an alternative embodiment of the invention the mobile node determines the amount of data of the unacknowledged protocol data units of the protocol sublayer for each radio bearer that is used for transmitting data to the access network.

Based on the above embodiment of the invention, upon receiving the request for additional system resources from the mobile node, the amount of system resources that are to be used for each radio bearer is decided, based on the priority of each radio bearer. The mobile node is then informed about this decision. Compared to the embodiment before, this has at least the advantage that the priorities of the radio bearer can be taken into account, and thus allows a more flexible implementation.

Referring to a yet another alternative embodiment of the invention, the mobile node determines the amount of data of the unacknowledged protocol data units of the protocol sublayer and the amount of data of the service data units to which the unacknowledged protocol data units belong. A request message is then transmitted to the access network for requesting additional system resources, comprising information on the determined amount of data. By including more information into the request message, the access network can take a more complex decision on how much resources to grant on to whom. In a more detailed embodiment of the invention, the decision which of the above determination methods to use is taken during the establishment of radio bearers for the transmission of data from the mobile node to the access network. Correspondingly, information on the decision is included in a message transmitted from the access network to the mobile node to inform the mobile node on the establishment of the radio bearers.

According to an advantageous embodiment of the invention, the mobile node assigns priorities to each radio bearer, based on the available system resources and/or based on information referring to the unacknowledged protocol data units, after the mobile node detects the upcoming command to perform the procedure comprising the reset of the protocol sublayer of the mobile node.

Another embodiment of the invention relates to the protocol sublayer being a radio link control sublayer of the mobile node. Also, the service data units of the radio link control sublayer are received from the packet data convergence protocol sublayer of the mobile node.

In a more specific embodiment of the invention the procedure comprising the reset of the protocol sublayer of the mobile node is a handover procedure of the mobile node from a first base station to a second base station in the mobile communications system.

In a continuation of the above embodiment of the invention, the mobile node perform measurements, relating to handover, on the radio channel between the mobile node and the access network .The mobile node detects the upcoming command to perform the handover procedure in case the mobile node determines that the measurements will trigger in the first base station a handover of the mobile node to the second base station. Advantageously, the mobile node is able to internally anticipate the future handover, and thus may start the re-transmission of unacknowledged protocol data units with enough time.

An alternative embodiment of the invention relates to the procedure comprising the reset of the protocol sublayer of the mobile node being a traffic redirection procedure for the mobile node from a first base station to a second base station in the mobile communications system.

Based on the above embodiment of the invention, the first base station decides whether to perform the traffic redirection procedure based on the traffic load in the network area controlled by the first base station. Furthermore, the mobile node detects the upcoming command to perform the traffic redirection procedure by receiving a pre-notification from the first base station, notifying the mobile node about the decision in the first base station to perform the traffic redirection procedure for the mobile node. In this case the mobile node is informed from extern about the upcoming event, which implies that mobile node does not need additional functionalities and may thus be simple.

One embodiment of the invention provides a mobile node for transmitting protocol data units of a protocol sublayer to an access network of a mobile communications system during a procedure comprising a reset of the protocol sublayer of the mobile node. A processor in the mobile node detects in advance the upcoming command to perform the procedure comprising the reset of the protocol sublayer of the mobile node and then stops the segmentation of service data units of the protocol sublayer into service data units of the protocol sublayer, upon detecting the upcoming command to perform the procedure. A transmitter in the mobile node re-transmits unacknowledged protocol data units of the protocol sublayer to the access network, upon detecting the upcoming command to perform the procedure.

According to another embodiment of the invention, the processor continues with the re-transmission of the unacknowledged protocol data units of the protocol sublayer after the reception of the command to perform the procedure until the mobile node changes its attachment to the access network.

In a further embodiment of the invention, a transmission buffer of the protocol sublayer comprises unacknowledged protocol data units and segmented protocol data units which have not been transmitted to the access network at the time of detecting the upcoming command to perform the procedure. In addition, the transmitter transmits the segmented protocol data units, which have not been transmitted to the access network, after re-transmitting all the unacknowledged protocol data units.

Another embodiment of the invention refers to the fact that the processor prioritizes the transmission of protocol data units of the protocol sublayer, which have been transmitted to the access network but have not been acknowledged by the access network, over the transmission of protocol data units, which have not been transmitted to the access network at the time of detecting the upcoming command to perform the procedure. Referring to a more detailed embodiment of the invention, the processor waits for a pre-determined time to receive the command to perform the procedure comprising the reset of the protocol sublayer, upon the processor detects the upcoming command to perform the procedure. In case the pre-determined time elapses before a receiver in the mobile node receives the command to perform the procedure, the processor re-starts the segmentation of service data units of the protocol sublayer.

In another embodiment of the invention the processor determines whether the system resources of the protocol sublayer are sufficient or not for re-transmitting the unacknowledged protocol data units of the protocol sublayer to the access network. In case the processor determines that the system resources are not sufficient, the transmitter transmits a request message to the access network for requesting additional system resources. A receiver in the mobile node receives from the access network information on the granted additional system resources. Furthermore, the processor then utilizes the granted additional system resources to re-transmit the unacknowledged protocol data units to the access network.

According to an advantageous embodiment of the invention, the procedure comprising the reset of the protocol sublayer is a handover procedure of the mobile node from a first base station to a second base station in the mobile communications system. In said case, the processor detects the upcoming command to perform the handover procedure when it determines that measurements on the radio channel between the mobile node and the access network will trigger in the first base station the handover of the mobile node to the second base station.

In an alternative embodiment of the invention, the procedure comprising the reset of the protocol sublayer is a traffic redirection procedure for the mobile node from a first base station to a second base station in the mobile communications system. In said case, the processor detects the upcoming command to perform the traffic redirection procedure when a receiver receives a pre-notification from the first base station about the decision in the first base station to perform the traffic redirection procedure for the mobile node, Another embodiment of the invention provides a base station using a protocol sublayer for exchanging data with the respective protocol sublayer of a mobile node in a mobile communication system during a procedure comprising a reset of the protocol sublayer. A processor in the base station decides to perform the procedure comprising the reset of the protocol sublayer. Also, a transmitter in the base station transmits a pre-notification to the mobile node for notifying the mobile node about the decision to perform the procedure, upon the processor performs the decision. A receiver in the base station receives unacknowledged protocol data units using the protocol sublayer the unacknowledged protocol units being retransmitted by the mobile node in the response to the pre-notification.

According to more specific embodiment of the invention, the procedure comprising the reset of the protocol sublayer is a traffic redirection procedure or a handover procedure for the mobile node from the base station to another base station.

In an advantageous embodiment of the invention, a receiver in the base station receives a resource request message from the mobile node for requesting additional system resources needed for transmitting an amount of data, wherein the resource request message comprises information on the amount of data. The processor further decides on an amount of system resources to be used for transmitting the amount of data, based on the received information in the resource request message. Then, the transmitter transmits to the mobile node information about the decided amount of system resources.

According to a detailed embodiment of the invention, the mobile node determines the amount of data comprised in the resource request message by determining the amount of data of unacknowledged protocol data units in the protocol sublayer of the mobile node, or by determining the amount of data of the unacknowledged protocol data units of the protocol sublayer for each radio bearer that is used for transmitting the protocol data units to the base station, or by determining the amount of data of the unacknowledged protocol data units of the protocol sublayer and the amount of data of service data units to which the unacknowledged protocol data units belong. Subsequently, the processor decides how the amount of data comprised in the resource request message is determined by the mobile node, and the transmitter transmits a configuration message to the mobile node informing the mobile node about the decision on how the amount of data is to be determined by the mobile node.

Referring to a further embodiment of the invention, the configuration message is the command message to perform the procedure comprising the reset of the protocol sublayer, or is a message transmitted from the base station to the mobile node to inform the mobile node on the establishment of radio bearers, or is a pre-notification message for notifying the mobile node about the decision to perform the procedure comprising the reset of the protocol sublayer.

Another embodiment of the invention provides a communication system according to claim 43.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS according to UMTS R99/4/5,
- **Fig. 2**: shows an exemplary architecture of the UTRAN according to the 3GPP LTE study project,
- **Fig. 3**: shows an overview of the OSI Layer model,
- **Fig. 4**: illustrates an overview of the radio interface protocol architecture of the UTRAN,
- **Fig. 5**: shows the relation of service data units (SDUs) and protocol data units (PDUs) in the OSI Layer model,
- **Fig. 6**: depicts an exemplary segmentation of an RLC SDU into several RLC PDUs,
- **Fig. 7**: is a signaling diagram for a handover procedure of a mobile node between a Source and Target eNode B,
- **Fig. 8**: is a signaling diagram for traffic redirection procedure of a mobile node between a Source and Target eNode B,
- **Fig. 9**: shows the transmission buffer and reception buffer of a mobile node and a base station, and is used to discuss the problem of the presence of unacknowledged protocol data units in the transmission buffer of the mobile node,
- **Fig. 10**: is a signaling diagram for a handover procedure according to one embodiment of the invention,
- **Fig. 11**: depicts the transmission buffer and reception buffer of a mobile node and a base station, and is utilized to exemplify the benefits of the embodiment of the invention,
- **Fig. 12**: again depicts the transmission buffer and reception buffer of a mobile node and a base station for a different scenario,
- **Fig. 13**: shows the signaling diagram for a traffic redirection procedure according to another embodiment of the invention,
- **Fig. 14**: illustrates the transmission buffers of a mobile node with two different radio bearers, and further depicts the amount of data for each protocol data unit in the buffers,
- **Fig. 15**: shows the transmission buffers of two mobile nodes, and illustrates the respective amounts of data for each protocol data unit in the buffers,
- **Fig. 16**: combines a signaling diagram for a handover procedure with the level of radio bearer transmissions at the time of anticipating the handover, wherein the impact of the limitations for re-transmissions of protocol data units is discussed, and
- **Fig. 17**: shows the transmissions buffers of a mobile node with two radio bearers having different priorities, and the corresponding contents of the transmission buffers.

### DETAILED DESCRIPTION

### Definitions

In the following a definition of a few terms frequently used in this document will be provided.

A mobile node is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

A reset of a protocol (sub)layer results in that current protocol data units of said protocol (sub)layer are flushed in the sender and the receiver side.

The following paragraphs will describe various embodiments of the invention. For exemplary purposes only, most of the embodiments are outlined in relation to a 3GPP-LTE and UMTS communication system according to the discussion in the Background Art section above and later on. It should be noted that the invention may be advantageously used for example in connection with a mobile communication system such as the 3GPP-LTE and UMTS communication system, but the invention is not limited to its use in this particular exemplary communication network.

The explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of these architectures/systems.

In the following, the relevant protocol sublayer will be the radio link control sublayer of the UE and Source eNB, though other (sub)layers may also be possible, and the skilled person may apply the following principles of the invention to those as well. For instance, the peer entity with which the mobile node communicates will change depending on the protocol sublayer and on the termination of the protocol sublayer. As can be seen from Fig. 4, the PDCP sublayer is terminated in the eNode B too. On the other hand, the NAS layer terminates in the access Gateway (aGW), which implies that the receiving entity is not the base station as with the RLC layer but the aGW. Similarly, other changes are also obvious for a person skilled in the art when applying the below embodiments of the invention to other sublayers than the exemplified RLC sublayer.

The radio link control (RLC) protocol is the Layer 2 protocol used in cellular systems for the transport of upper layer PDUs, i.e. IP Packets, received from PDCP layer in Access Gateway and for error recovery for both user and control data.

An RLC SDU may be e.g. a PDCP PDU (including a PDCP header). The RLC layer includes segmentation and concatenation functionality as already described before. Therefore an RLC PDU can be (or contains) one (or several) segment(s) of one (or several) RLC SDU(s).

There are three operational modes for RLC: Transparent Mode (TM), Unacknowledged Mode (UM) and Acknowledged Mode (AM). Each RLC entity is configured by RRC to operate in one of these nodes. The service the RLC layer provides in the control plane is called Signaling Radio Bearer (SRB). In the user plane, the service provided by RLC layer is called a Radio Bearer (RB).

In **Transparent Mode** no protocol overhead is added to RLC SDUs received from higher layer. In special cases, transmission with limited segmentation/reassembly capability can be accomplished. It has to be negotiated in the radio bearer setup procedure, whether segmentation/reassembly is used. The transparent mode is e.g. used for very delay-sensitive services like speech.

In **Unacknowledged Mode** data delivery is not guaranteed since no retransmission protocol is used. The PDU structure includes sequence numbers for integrity observations in higher layers. Segmentation and concatenation are provided by means of header fields added to the data. The RLC entity in Unacknowledged mode is unidirectional, since there are no associations defined between uplink and downlink. If erroneous data is received, the corresponding PDUs are discarded or marked depending on the configuration. In the transmitter, the RLC SDUs which are not transmitted within a certain time specified by a timer are discarded and removed from the transmission buffer. The RLC SDUs, received from higher layer, are segmented/concatenated into RLC PDUs on sender side. On receiver side reassembly is performed correspondingly. The unacknowledged mode is used, for example, for certain RRC signaling procedures. Examples of user services are the cell broadcast service (e.g. MBMS) and voice over IP (VoIP).

In **Acknowledged Mode** the RLC layer supports error correction by means of an Automatic Repeat Request (ARQ) protocol. RLC retransmissions are for example based on RLC status reports, i.e. ACK/NACK, received from the peer RLC receiving entity, in this case the base station. The acknowledged mode is designed for a reliable transport of packet data through retransmission in the presence of high air interface bit error rates. In case of erroneous or lost PDUs, retransmission is conducted by the sender upon reception of a status report from the receiver.

ARQ is used as a retransmission scheme for retransmission of erroneous or missed PDUs. The status report can e.g. be polled by the sender or self-triggered, i.e. upon detection a break in the sequence numbers order. The receiver sends a status report to the sender when triggered. The report typically indicates the reception status (either ACKs or NACKs) within the receiving window and up to the last received PDU.

An acknowledged mode RLC can be configured to provide both in-sequence and out-of sequence delivery to higher layers. As already mentioned before, in addition to data PDU delivery, status and reset control PDUs can be signaled between the peer entities. The acknowledged mode is the default mode for packet-type services, such as interactive and background services.

In summary, the main services and functions of the RLC sublayer include:
- Transfer of upper layer PDUs supporting AM, UM or TM data transfer;
- Error Correction through ARQ;
- Segmentation according to the size of the TB;
- Resegmentation when necessary (e.g. when the radio quality, i.e. the supported TB size changes)
- Concatenation of SDUs for the same radio bearer is FFS;
- In-sequence delivery of upper layer PDUs;
- Duplicate Detection;
- Protocol error detection and recovery;
- SDU discard;
- Reset.

For the following discussions it is assumed that the RLC layer is configured in the acknowledged mode.

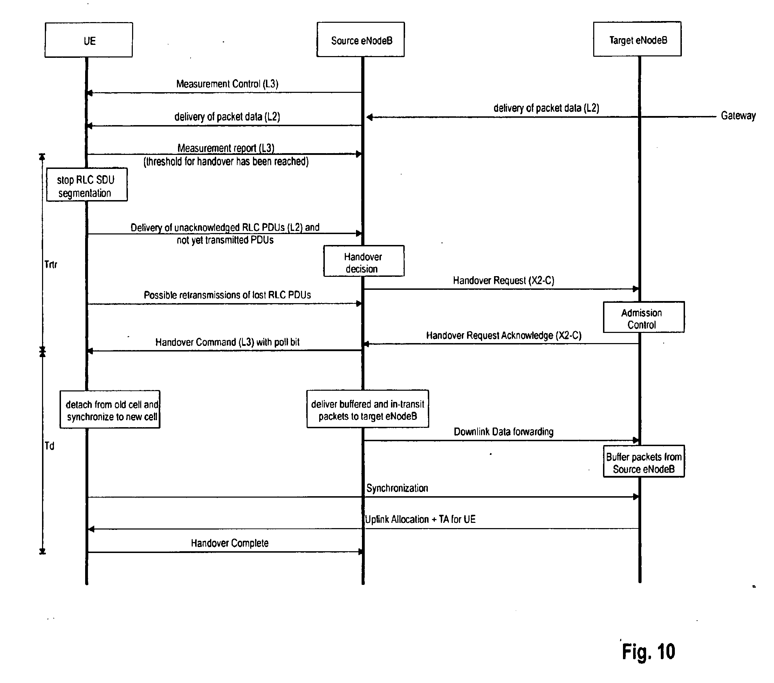

A first aspect of the invention is based on an early detection of a command with which the protocol sublayer of the mobile node will be restarted. One embodiment of the invention will be discussed in more detail while referring to Fig. 10, which shows a signaling diagram for a handover procedure of the UE according to the embodiment of the invention. In more detail, the UE is enabled to determine whether measurements which are conducted for handover purposes will trigger the handover in the Source eNode B to which it is currently attached. In other words, usually the only entity, which decides on whether a handover is necessary, is the eNode B. According to the embodiment of the invention, the UEs feature the same functionality in order to detect in advance the upcoming decision in the Source eNode B. This also implies that the decisions in the UE and the Source eNode B should be based on the same parameters. Therefore, it is necessary to synchronize the decision parameters/thresholds so that the UE may correctly foresee the handover decision in the Source eNode B. For example, when the operator configures the parameters for the handover decision in the Source eNode B, the UE must be provided with the same parameters as well. This may be done on a dynamic basis by the Source eNB or based upon semi-static configuration by the operator.

As already explained before, the UE constantly performs measurements on the radio channel (e.g. quality) and then informs the Source eNB about same with the Measurement Report message. Since the UE is now furnished with the ability to determine whether the measurements surpass/fall below a threshold that would trigger the handover procedure in the Source eNB, the UE will eventually detect the upcoming handover decision upon measuring a specific radio channel parameter. For example, once the radio channel quality falls below a minimum value that ensures the correct and efficient transmission over the air interface, the UE may report this to the Source eNB and at the same time determines for itself that the Source eNB will indeed trigger a handover, due to the bad radio channel quality.

In that case, the UE stops the ongoing segmentation of RLC SDUs to RLC PDUs, according to the embodiment of the invention. This ensures that no more PDUs are generated at the RLC sublayer, and the corresponding transmission buffer of the RLC layer in the UE is no longer filled up. Essentially at the same time, the RLC protocol sublayer starts emptying its transmission buffer. This includes that all present RLC PDUs of the transmission buffer are transmitted to the Source eNB, comprising inter alia unacknowledged PDUs and not yet transmitted PDUs. In Fig. 10 the time Trtr is depicted during which the UE may perform the re-transmissions of the unacknowledged RLC PDUs. This time Trtr may be either configured to last till the actual detach of the UE from the radio cell (not shown), or may stretch until the reception of the handover command, as actually illustrated in Fig. 10.

According to a more advantageous embodiment of the invention, the UE prioritises the transmission of those remaining unacknowledged RLC PDUs that belong to RLC SDUs which could not be reassembled in the Source eNB due to the erroneous RLC PDUs. This is advantageous since this yields the best possible use of system resources, because parts of the RLC SDUs have already been correctly received in the Source eNB and by re-transmitting those unacknowledged RLC PDUs belonging to those same RLC SDUs, the RLC SDUs may be correctly reassembled and no resources have been wasted.

This will be exemplified with reference to Fig. 9. RLC PDUs 1 and 3 have been correctly received in the Source eNB, whereas RLC PDUs 2 and 4 have been incorrectly received in the Source eNB. Accordingly, RLC PDUs 1 and 3 have been acknowledged, and RLC PDUs 3 and 4 remain unacknowledged. According to the embodiment of the invention, the segmentation of PDCP PDUs to RLC PDUs is halted at that point, wherein only RLC PDUs 1-4 remain in the transmission buffer.

Correspondingly, the reception buffer of the receiving side (Source eNB) is constituted only by RLC PDUs 1 and 3. Hence, the RLC SDUs 1 and 2 cannot be reassembled, since RLC PDUs 2 and 4 are still missing. Now, according to the embodiment of the invention, upon detecting the upcoming command to perform the handover and thus reset the RLC sublayer, the UE re-transmits RLC PDUs 2 and 4, until they are correctly received by the Source eNB and thus acknowledged. This may also include further re-transmissions in case the RLC PDUs are again erroneously transmitted to the Source eNB. This may be accomplished by a timer with a predetermined period of time for which the UE waits to receive the acknowledgements from the Source eNB regarding the re-transmitted RLC PDUs.

As a result, the Source eNB can combine the four RLC PDUs to form RLC SDUs 1 and 2. There is no need to flush RLC PDUs 1 and 3 in the Source eNB, like in the prior art. Correspondingly, the RLC SDUs 1 and 2 would then be forwarded to the PDCP layer as PDCP PDUs 1 and 2, and the reception buffer of the RLC layer in the Source eNB gets empty.

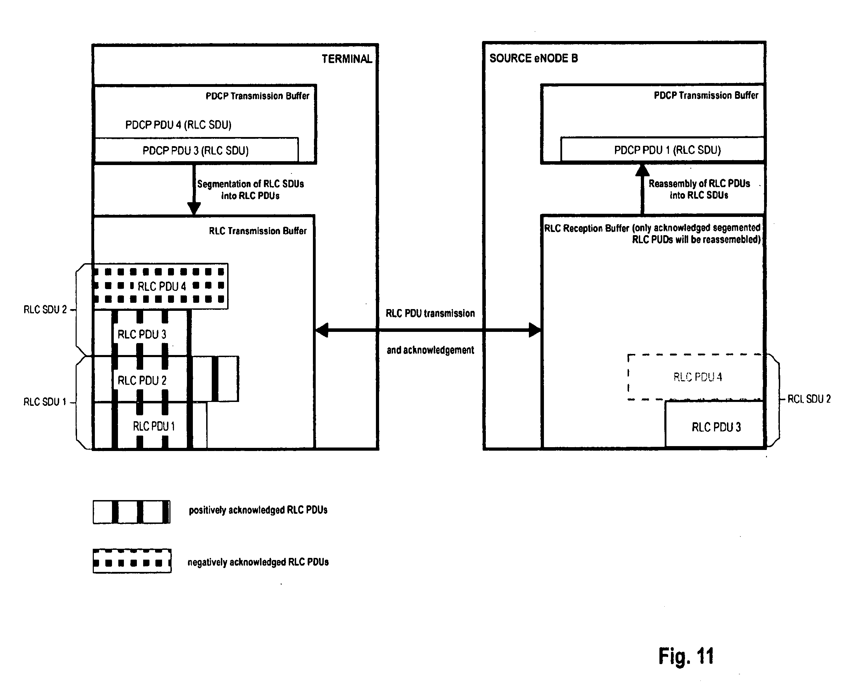

Fig. 11 shows a slightly different composition of the transmission buffer of the RLC sublayer in the UE. Namely, RLC PDUs 1 to 3 have been correctly transmitted to the Source eNB and thus positively acknowledged. Only RLC PDU 4 is not acknowledged by the Source eNB. Therefore, RLC SDU 1, composed of RLC PDUs 1 and 2, can be reassembled in the Source eNB and then forwarded to the PDCP layer. In contrast, RLC SDU 2 cannot be generated due to the missing RLC PDU 4. According to the invention, upon the UE determines that a measurement will trigger the handover procedure in the Source eNB, segmentation is halted, and the RLC PDU 4 is re-transmitted to the Source eNB.

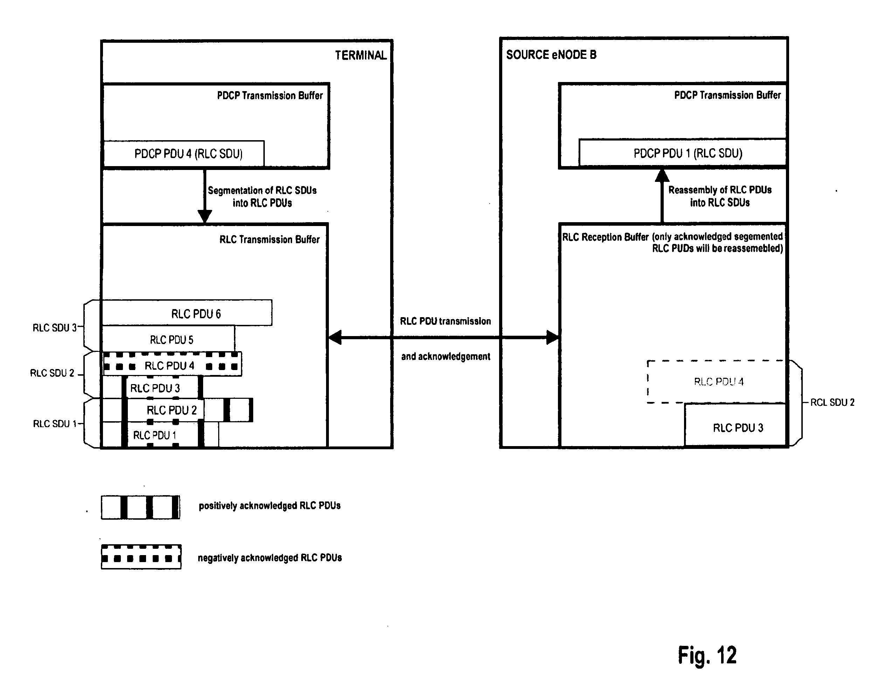

Yet another example is given in Fig. 12, wherein the transmission buffer of the RLC sublayer in the UE also possesses PDUs that have not been transmitted before und are thus also not received in the Source eNB. In other words, PDCP PDU 3 had also been segmented at the time the UE stopped the segmentation because of an upcoming command to restart the RLC sublayer. RLC PDUs 5 and 6 constitute the PDCP PDU 3 and are also within the transmission buffer along with the remaining RLC PDUs 1 to 4, of which only RLC PDU 4 is unacknowledged. Thus, the PDCP PDU 1 has already been assembled from RLC PDUs 1 and 2, which have been correctly received, and is now in the transmission buffer of the PDCP layer for further transmission to e.g. the aGW.

The advantageous prioritization of the transmission yields that at first RLC PDU 4 is re-transmitted before transmitting for the first time RLC PDUs 5 and 6. Therefore, the prioritization may be split-up in at least two parts:
1. The UE distributes allocated uplink resources between unacknowledged RLC PDUs (PDU 4), which have not been reassembled to RLC SDUs in the Source eNB, and
2. the UE distributes allocated uplink resources between RLC PDUs that have not been transmitted before.

Furthermore, there may be a plurality of radio bearers present for providing the PDUs to the Source eNB. That is, the PDUs are assigned a radio bearer via which they are respectively transmitted to the Source eNB. The different radio bearers have priorities which are considered and taken into account when allocating uplink resources for transmitting RLC PDUs. In our case, this means that the UE first distributes uplink resources between unacknowledged RLC PDUs to the different radio bearers according to their priorities, e.g. in decreasing order of priorities.

Generally, it is assumed that limitations regarding MBR and AMBR apply for the radio bearers too, as discusses in the Background section.

As a result, PDCP PDUs 1, 2 and 3 would have been transmitted to the Source eNode B before the actual Handover takes place. After the handover, only PDCP PDU 4 has to be transmitted from the UE to the Target eNB.

Since in general the unacknowledged RLC PDUs have been re-transmitted to the Source eNB before the actual handover command is received by the UE, the default activation time of the [eRRC] Handover Command is "now". This means that no additional delay is introduced in the Handover procedure. However, as assumed before, it might also be possible to continue with the re-transmission of unacknowledged RLC PDUs according to the embodiment of the invention after receiving the Handover Command until the actual change of attachment from the Source to the Target cell.

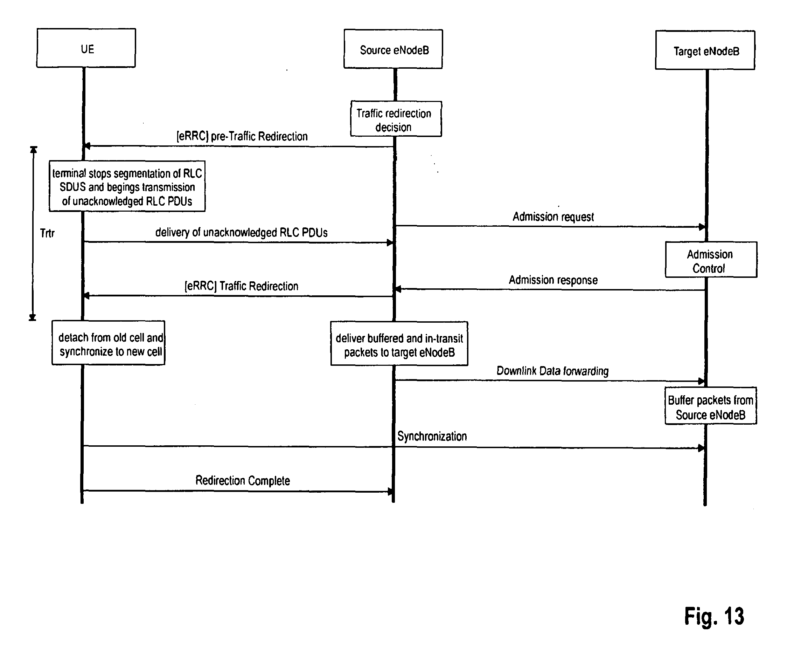

In the following, the traffic redirection procedure according to another embodiment of the invention will be thoroughly discussed in connection with Fig. 13. In order for the UE to detect the pending command to re-establish the RLC layer, a pre-Traffic-Redirection message is transmitted from the Source eNB to the UE. In more detail, due to traffic load balancing it is assumed that the Source eNB will eventually decide for a traffic redirection procedure for the UE. In such a case, immediately upon making the decision, the Source eNB notifies the UE about the decision, this however being not the actual command for redirection since, it is first necessary to perform the admission control with the Target eNB.

The remaining procedure strongly resembles the process previously discussed with respect to the handover process. More specifically, as soon as the UE receives the pre-Traffic Redirection message, it instructs the RLC layer to pause the segmentation of PDCP PDUs into RLC PDUs. At the time of receiving the pre-Traffic Redirection message it is assumed that the transmission buffer of the RLC layer in the UE coincides with the illustration in Fig. 9. Likewise, RLC PDUs 1 and 3 have been correctly received in the Source eNB, however cannot be combined to form the respective RLC SDUs, because RLC PDUs 2 and 4 have been erroneously transmitted. The RLC layer may now re-transmit the RLC PDUs 2 and 4, so that the Source eNB can then reassemble RLC SDUs 1 and 2, and pass them to the PDCP layer for further use.

Again, available uplink system resources may be distributed between the RLC PDUs 2 and 4 depending on the priorities of the respective radio bearers used for transmission of RLC PDUs 2 and 4, i.e. in decreasing order of the assigned priorities.

During the time Trtr as indicated in Fig. 13, the UE may re-transmit unacknowledged RLC PDUs to the Source eNB, that have not been already reassembled into RLC SDUs in the Source eNB. Though it is not shown in Fig. 13, the time Trtr may alternatively be configured e.g. by the operator to only reach until the reception of the Traffic Redirection Command.

In the Handover as well as in the Traffic Redirection case, there is the possibility that no handover/traffic redirection actually takes place, though a corresponding decision has been taken. For instance, the final decision also depends on the admission control performed in the Target eNB. Therefore, in case there is no positive admission control decision in the Target eNB, no handover/traffic redirection to said Target eNB can happen. In order to mitigate said problem, a timer is implemented in the terminal that is triggered once the upcoming command to reset the RLC layer is detected (either internally or externally). During said pre-determined time, which may be freely configured e.g. by the operator, the UE waits for the actual command to perform the procedure comprising the reset of the RLC layer. Should the command not be received in said time frame and the timer thus elapses, the normal mode of operation is resumed, that is, the segmentation is restarted and RLC PDUs are transmitted to the Source eNB as before.

Moreover, an assumption has been made so far in that a terminal has enough resources to perform the uplink re-transmission of the unacknowledged RLC PDUs once upcoming hard handover or traffic redirection procedure has been detected in the UE. However, in real world scenarios this might not be the case. There might arise the problem that not all unacknowledged RLC PDUs can be transmitted to the Source eNB, or at least not before the UE detaches from the source radio cell. Possible solutions for these scenarios will be presented in the following.

Generally speaking, the UE needs to request additional resources from the network. This means that as soon as the UE determines that its granted and available system resources will not suffice to perform the re-transmission of at least all unacknowledged RLC PDUs, it needs to transmit a request message to the eNB for ordering new resources to be granted for the UE. Provided that the source radio cell is not overloaded, the UE will be granted additional resources which it may use to transmit all RLC PDUs to the Source eNB in due time.

In more detail, the terminal would have to use the [eMAC] RESOURCE REQUEST message for allocating additional resources to the uplink re-transmission used according to the different embodiments of the invention. After receiving said message, the Source eNode B may deliver additional resources for uplink transmission to the terminal by scheduling corresponding resource information in the L1/2 control channel to the UE.

According to more specific embodiments of the invention, several approaches may be used to determine which amount of system resources to request from the Source eNB. The basic Resource Request message contains only the amount of unsegmented RLC SDUs pending for transmission in the transmission buffer of the RLC layer in the terminal. In the following text, an extension of the contents of the Resource Request message is proposed.

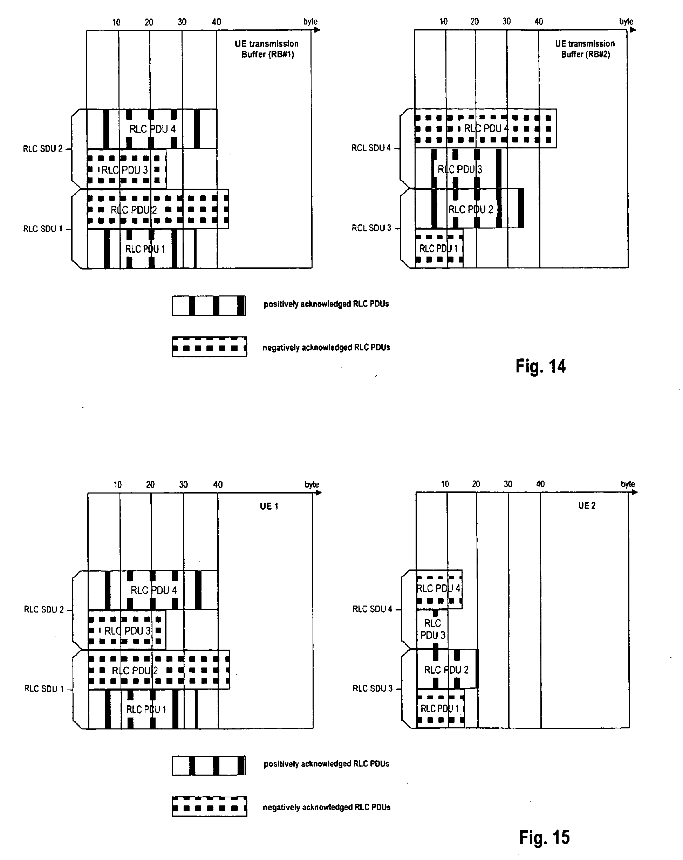

According to an embodiment of the invention, a Resource Request Type 1 (RR Type 1) message may be defined as containing the amount of unacknowledged RLC PDUs which have not been reassembled to RLC SDUs in Source eNode B [byte]. Hence, the Source eNode B can grant the amount of resources necessary to transmit unacknowledged RLC PDUs of all RBs, which have not been reassembled to RLC SDUs in the Source eNode B. An exemplary scenario to explain the contents of the RR Type 1 message for two Radio Bearers of different priorities has been illustrated in the Figure 14.

45 Bytes (RB#1: RLC PDU 2) + 25 Bytes (RB#1: RLC PDU 3) + 15 Bytes (RB#2: RLC PDU 1) + 45 Bytes (RB#2:RLC PDU 4) = 130 Bytes

As a result from the above calculation, the content of the Resource Request Type 1 message amounts to 130 bytes, which the Source eNB needs to grant to the UE.

According to a different embodiment of the invention, a Resource Request Type 2 (RR Type 2) message may be defined as containing the amount of unacknowledged RLC PDUs for each radio bearer and depending on the priority of each radio bearer [byte]. If there are not sufficient resources, the Source eNode B can grant the few system resources only for packets belonging to the Radio Bearer of the highest priority. In more detail, the exemplary scenario of Fig. 14 is used again to explain the contents of the RR Type 2 message for two Radio Bearers of different priorities.
[45 Bytes (RB#1: RLC PDU 2) + 25 Bytes (RB#1: RLC PDU 3)] + [15 Bytes (RB#2: RLC PDU 1) + 45 Bytes (RB#2:RLC PDU 4) ] = 70 Bytes (RB#1)+ 60 Bytes (RB#2)

Consequently, provided that RB#1 has a higher priority than RB#2, the Source eNB would rather grant system resources for transmitting the 70 bytes of RB#1, before granting the remaining resources for the transmission of the 60 bytes of RB#2.

Additionally, if there are scarce resources to grant to the UE for transmitting unacknowledged RLC PDUs that have not been reassembled to RLC SDUs in the Source eNode B, the Source eNode B can grant resources only if a considerable amount of bytes of RLC SDUs would have to be transmitted under Target eNode B. Therefore, according to another embodiment of the invention the Resource Request Type 3 (RR Type 3) message is defined as containing the amount of unacknowledged RLC PDUs which have not been reassembled to RLC SDUs in the Source eNode B [byte] and the amount of RLC SDUs [byte] which should be transmitted under Target eNode B if these RLC PDUs (SDUs) are lost.

An exemplary scenario to explain the contents of the RR Type 3 message and a possible implementation of Serving eNode B decision-making process for two terminals with different amounts of buffered packets has been illustrated in Figure 15. For the first terminal, the contents of the RR Type 3 message can be derived as 45 Bytes (RLC PDU 2) + 25 Bytes (RLC PDU 3) = 70 Bytes, while RLC SDU 1 + SDU 2 = 145 Bytes. The contents of the RR Type 3 message for the second terminal can be derived as 15 Bytes (RLC PDU 1) + 15 Bytes (RLC PDU 4) = 30 Bytes, while RLC SDU 3 + SDU 4 = 60 Bytes. When observing the first terminal, the amount of RLC SDUs to be lost is considerable, so the Source eNode B will grant resources for the transmission of 70 Bytes of unacknowledged RLC PDUs of UE1. On the other hand, when observing the second terminal, the amount of RLC SDUs to be lost is not considerable, so eNode B will not grant resources for the transmission of 30 Bytes of unacknowledged RLC PDUs.

It is further assumed that the respective types of Resource Request messages to be used in case of insufficient resources is configured before triggering the procedure of handover or traffic redirection. The decision for a specific Resource Request message type may be freely taken. There are no restrictions whatsoever, thus the decision solely depends on e.g. the operator's choice. Also, the decision may depend on the kind of terminal, namely, whether the terminal is a simple UE for which e.g. the Resource Request Type 1 may be used. For more complex UEs RR Type 2 or 3 may consequently be used. However, as already mentioned, the above examples are not to be construed as limiting the scope of the invention, but merely provided for illustration purposes.

The UE may be informed about the decision for which Type of RR message e.g. during [eRRC] RB SETUP or [eRRC] RB RECONFIGURATION. Alternatively, the decision for which type of Resource Request message may also be included in a message of the respective procedure. For instance, in case of handover, the [eRRC] HANDOVER COMMAND message may be used. Correspondingly, if a traffic redirection procedure is to be performed according to an embodiment of the invention, the information relating to the type of Resource Request message may be comprised in the [eRRC] PRE-TRAFFIC REDIRECTION message.

In each system, a UE should distribute its system resources per each Guaranteed Bit Rate (GBR) Radio Bearer (RB) up to the data transmission rate equal to MBR (Maximum Bit Rate) of observed GBR RB, and per each group of non-GBR RBs up to the data transmission rate equal to AMBR of observed group of non-GBR RBs for the existing grant. This may lead to a scenario wherein transmission rate has to be exceeded in order to deliver all RLC PDUs of observed Radio Bearer in due time. This naturally also depends on whether the time for re-transmitting unacknowledged RLC PDUs is chosen until the reception of the command to perform the procedure comprising the reset of the RLC layer (i.e. [eRRC] HANDOVER COMMAND message or [eRRC] TRAFFIC REDIRECTION message). Alternatively, the UE may have time to empty its RLC transmission buffer until the UE actually detaches from the Source cell.

Hence, the following modifications in the terminal behavior are proposed. Once an [eRRC] MEASUREMENT REPORT which will trigger handover is transmitted or an [eRRC] PRE-TRAFFIC REDIRECTION message according to the embodiment of the invention is received, the terminal is allowed to exceed MBR/AMBR of observed GBR RB/group of non-GBR RBs.

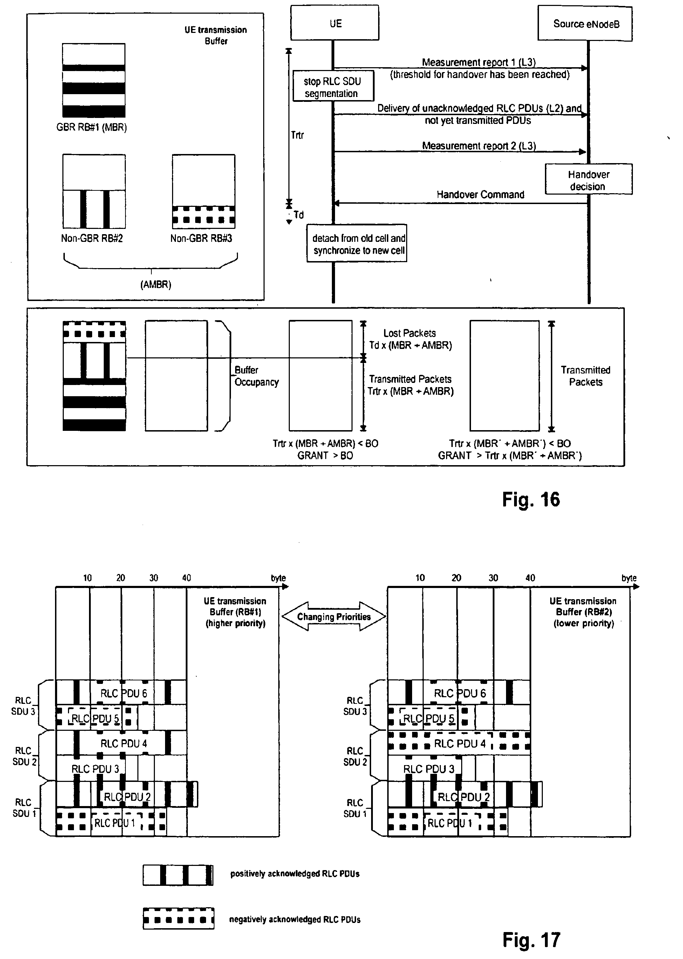

The benefit of the proposed change is illustrated in Fig. 16. Even though the current grant is sufficient to transmit the unacknowledged RLC PDUs to the Source eNB, this cannot be done within the time Trtr without exceeding MBR/AMBR. Therefore, handover would be delayed for Td or the remaining packets would be lost after receiving the [eRRC] HANDOVER COMMAND. According to an embodiment of the invention, the terminal is allowed to use the parameters MBR'>MBR and AMBR'>AMBR. Hence, the transmission of all unacknowledged RLC PDUs can be done within Trtr without loosing any packets or delaying the handover procedure.

In more detail, three radio bearers are used by the UE to provide data packets to the Source eNB. In each of the three radio bearers one part is not received correctly by the Source eNB, and has to be transmitted again. Radio Bearer #1 is assumed to be limited by a MBR, and Radio Bearers #2 and #3 are forming a group of radio bearers and are therefore limited as a whole by an AMBR. As depicted in the lower part of Fig. 16, by following the limitations given by MBR and AMBR, it is not possible to transmit all unacknowledged RLC PDUs to the Source eNB in the time frame given by Trtr. Only by increasing the limitations, a timely re-transmission of RLC PDUs is ensured.

Moreover, priorities of Radio Bearers are usually configured by an [eRRC] RADIO BEARER SETUP message at the beginning of user plane establishment. However, if a terminal has received an [eMAC] RESOURCE GRANT message with a Grant that is not sufficient to transmit unacknowledged RLC PDUs, the terminal shall be able to change the previously configured priorities of the radio bearers, if that would result in a more resource-efficient radio transmission. This considerations apply to the terminal behaviour for the traffic redirection process and the handover procedure.

This will be described in more detail with reference to Fig. 17. For RB#1 with a higher priority, if the negatively acknowledged RLC PDUs (RLC PDU 1 and RLC PDU 5) were not transmitted successfully under the Source eNode B, only RLC SDU 1 and RLC SDU 3 would have to be retransmitted under the Target eNode B.

In correspondence, for RB#2 with a lower priority, following reasoning applies: If the negatively acknowledged RLC PDUs (RLC PDU 1, RLC PDU 4 and RLC PDU 5) were not transmitted successfully under Source eNode B, RLC SDU 1, 2 and 3 would have to be retransmitted under Target eNode B. In order to support more efficient radio transmission, UE may decide to transmit the RLC PDUs of RB#2 with higher priority and the RLC PDUs of RB#1 with a lower priority. Thus, after appropriately changing the priorities of the two radio bearers, the order of transmission is the following: RB#2 (RLC PDU 1, RLC PDU 4, RLC PDU 5) and RB#1 (RLC PDU 1 and RLC PDU 5).

One of the advantages provided by the different embodiments of the invention is that no additional delay is introduced into the procedure comprising the reset of the protocol sublayer, be it a handover or traffic redirection process. At the same time no packet loss occurs during the procedure since there is generally enough time to transmit all remaining PDUs in the transmission buffer before the buffer is flushed due to the e.g. handover event.

Further, as already briefly mentioned above it is to be noted that the concepts of the invention outlined in various exemplary embodiments herein may be advantageously used in a mobile communication system as described in the Technological background section that may for example have an architecture as exemplified in Fig. 1 or Fig. 2.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the scope of the invention as defined by the claims.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GGP.

## Claims

1. A method for transmitting data from a mobile node via a protocol sublayer of the mobile node to an access network of a mobile communications system during a procedure comprising a reset of the protocol sublayer of the mobile node, the method
**characterized by the steps of:**
upon detecting at the mobile node in advance the upcoming command to perform the procedure comprising the reset of the protocol sublayer of the mobile node,
stopping the segmentation of service data units of the protocol sublayer into protocol data units of the protocol sublayer, and
re-transmitting by the protocol sublayer of the mobile node unacknowledged protocol data units to the access network.

2. The method of claim 1, wherein the re-transmission of unacknowledged protocol data units to the access network is continued after the reception of the command to perform the procedure comprising the reset of the protocol sublayer of the mobile node until the mobile node changes its attachment to the access network.

3. The method of one of claims 1 to 2, further comprising the steps of, the steps being performed before detecting the upcoming command to perform the procedure comprising the reset of the protocol sub layer of the mobile node:
upon receiving the service data units from a second protocol sublayer in the protocol sublayer, segmenting the service data units into protocol data units of the protocol sublayer,
inputting the segmented protocol data units of the protocol sublayer into a transmission buffer of the protocol sublayer, and
wherein the step of re-transmitting comprises re-transmitting the segmented protocol data units in the transmission buffer of the protocol sublayer, which have been transmitted to the access network but have not been acknowledged by the access network.

4. The method of claim 3, wherein the transmission buffer of the protocol sublayer of the mobile node further comprises segmented protocol data units which have not been transmitted to the access network at the time of detecting the upcoming command to perform the procedure comprising the reset of the protocol sublayer, and the method further comprises the step of:
after re-transmitting all the unacknowledged protocol data units in the transmission buffer to the access network, transmitting by the protocol sublayer the segmented protocol data units to the access network, which have not been transmitted to the access network.

5. The method of claims 1 or 2, wherein the protocol sublayer is a radio link control sublayer, further comprising the steps of:
prioritizing the transmission of protocol data units of the radio link control sublayer, which have been transmitted to the access network but have not been acknowledged by the access network, over the transmission of protocol data units of the radio link control sublayer, which have not been transmitted to the access network at the time of detecting the upcoming command to perform the procedure comprising the reset of the protocol sublayer.

6. The method of one of claims 1 to 5, wherein upon detecting the upcoming command to perform the procedure comprising the reset of the protocol sublayer of the mobile node, the mobile node waits for a pre-determined time to receive the command to perform the procedure comprising the reset of the protocol sublayer of the mobile node, and in case the pre-determined time elapses before the mobile node receives the command to perform the procedure comprising the reset of the protocol sublayer of the mobile node, the mobile nodes re-starts the segmentation of service data units of the protocol sublayer into protocol data units of the protocol sublayer.

7. The method of one of claims 1 to 6, wherein the protocol sublayer of the mobile node has limited system resources for re-transmitting the unacknowledged protocol data units of the protocol sublayer to the access network, the method further comprising the steps of:
in case the system resources of the mobile node are not sufficient to re-transmit the unacknowledged protocol data units, requesting by the mobile node additional system resources from the access network,
receiving in the mobile node from the access network information on the additional system resources, and
utilizing the additional system resources to re-transmit the unacknowledged protocol data units to the access network.

8. The method of claim 7, wherein the step of requesting additional system resources by the mobile node comprises the steps of:
determining by the mobile node the amount of data of the unacknowledged protocol data units of the protocol sublayer, and
transmitting a request message to the access network for requesting additional system resources, comprising information on the determined amount of data of the unacknowledged protocol data units.

9. The method of claim 7, wherein the step of requesting additional system resources by the mobile node comprises the steps of:
determining by the mobile node the amount of data of the unacknowledged protocol data units of the protocol sublayer for each radio bearer that is used for transmitting data to the access network, and
transmitting a request message to the access network for requesting additional system resources, comprising information on the determined amount of data of the unacknowledged protocol data units for each radio bearer.

10. The method of claim 9, wherein each radio bearer has a priority, and the method further comprises the steps of:
upon receiving the request for additional system resources from the mobile node, deciding on the amount of system resources to be used for each radio bearer, based on the priority of each radio bearer, and
informing the mobile node about the amount of system resources for each radio bearer.

11. The method of claim 7, wherein the step of requesting additional system resources by the mobile node comprises the steps of:
determining by the mobile node the amount of data of the unacknowledged protocol data units of the protocol sublayer and the amount of data of the service data units to which the unacknowledged protocol data units belong, and
transmitting a request message to the access network for requesting additional system resources, comprising information on the determined amount of data of the unacknowledged protocol data units and of the amount of data of the service data units to which the unacknowledged protocol data units belong.

12. The method of claim 11 further comprising the steps of:
upon receiving the request message from the mobile node in a base station of the access network, deciding on the amount of system resources to be used for re-transmitting each of the unacknowledged protocol data units, based on the received information in the request message, and
informing the mobile node about the amount of system resources for each protocol data unit.

13. The method of claim 8, 9 or 11 further comprising the step of:
informing the mobile node on whether to use the method steps according to claim 8, claim 9 or claim 11.

14. The method of claim 13, wherein the step of informing the mobile node comprises the steps of:
during the establishment of radio bearers for the transmission of data from the mobile node to the access network, deciding on whether to use the method steps according to claim 8, 9 or 11, and
including information on the decision in a message transmitted from the access network to the mobile node to inform the mobile node on the establishment of the radio bearers.

15. The method of claim 13, wherein the step of informing the mobile node comprises the steps of:
deciding on whether to use the method steps according to claim 8, 9 or 11, and
including information on the decision in the command to perform the procedure comprising the reset of the protocol sublayer.

16. The method of claim 13, wherein the step of informing the mobile node comprises the steps of:
deciding on whether to use the method steps according to claim 8, 9 or 11, and
including information on the decision in a pre-notification message for notifying the mobile node about the decision to perform the procedure comprising the reset of the protocol sublayer.

17. The method of one of claims 1 to 16, wherein a maximum amount of system resources is assigned for each radio bearer that is utilized for re-transmitting the unacknowledged protocol data units to the access network, and the method further comprises the steps of.
in case the maximum amount of system resources for each radio bearer is not sufficient to re-transmit all the unacknowledged protocol data units to the access network before the protocol sublayer is reset, the mobile node exceeds the maximum amount of system resources for each radio bearer.

18. The method of one of claim 1 to 17 comprising the steps of:
after the mobile node detects the upcoming command to perform the procedure comprising the reset of the protocol sublayer of the mobile node, the mobile node assigns priorities to each radio bearer, based on the available system resources and/or based on information referring to the unacknowledged protocol data units.

19. The method of one of claims 1 to 18, wherein the protocol sublayer is a radio link control sublayer of the mobile node, and the service data units of the radio link control sublayer are received from the packet data convergence protocol sublayer of the mobile node.

20. The method of one of claims 1 to 19, wherein the procedure comprising the reset of the protocol sublayer of the mobile node is a handover procedure of the mobile node from a first base station to a second base station in the mobile communications system.

21. The method of claim 20 comprising the steps of:
performing by the mobile node measurements, relating to handover, on the radio channel between the mobile node and the access network ,
wherein the mobile node detects the upcoming command to perform the handover procedure in case the mobile node determines that the measurements will trigger in the first base station a handover of the mobile node to the second base station.

22. The method of one of claims 1 to 19, wherein the procedure comprising the reset of the protocol sublayer of the mobile node is a traffic redirection procedure for the mobile node from a first base station to a second base station in the mobile communications system.

23. The method of claim 22 comprising the step of:
deciding in the first base station whether to perform the traffic redirection procedure based on the traffic load in the network area controlled by the first base station, and
wherein the mobile node detects the upcoming command to perform the traffic redirection procedure by receiving a pre-notification from the first base station, notifying the mobile node about the decision in the first base station to perform the traffic redirection procedure for the mobile node.

24. The method of one of claims 1 to 23, wherein at least one radio bearer is used to transmit the protocol data units from the mobile node to the access network, and each radio bearer has been assigned a priority, and wherein the step of re-transmitting the unacknowledged protocol data units is performed based on the priority of each radio bearer.

25. The method of one of claims 1 to 24, wherein in case the protocol layer is terminated in a base station or an access gateway of the mobile communications system, the step of re-transmitting re-transmits the unacknowledged protocol data units to the base station or the access gateway.

26. A mobile node for transmitting protocol data units of a protocol sublayer to an access network of a mobile communications system during a procedure comprising a reset of the protocol sublayer of the mobile node, wherein the mobile node is
**characterized by:**
a processor adapted to detect in advance the upcoming command to perform the procedure comprising the reset of the protocol sublayer of the mobile node,
the processor further adapted to stop the segmentation of service data units of the protocol sublayer into service data units of the protocol sublayer, upon detecting the upcoming command to perform the procedure, and
a transmitter adapted to re-transmit unacknowledged protocol data units of the protocol sublayer to the access network, upon detecting the upcoming command to perform the procedure.

27. The mobile node of claim 26, wherein the processor is further adapted to continue the re-transmission of the unacknowledged protocol data units of the protocol sublayer after the reception of the command to perform the procedure until the mobile node changes its attachment to the access network.

28. The mobile node of claims 26 or 27, wherein a transmission buffer of the protocol sublayer comprises unacknowledged protocol data units and segmented protocol data units which have not been transmitted to the access network at the time of detecting the upcoming command to perform the procedure comprising the reset of the protocol sublayer, and
the transmitter is adapted to transmit the segmented protocol data units, which have not been transmitted to the access network, after re-transmitting all the unacknowledged protocol data units.

29. The mobile node of one of claims 26 to 28, wherein the processor is further adapted to prioritize the transmission of protocol data units of the protocol sublayer, which have been transmitted to the access network but have not been acknowledged by the access network, over the transmission of protocol data units, which have not been transmitted to the access network at the time of detecting the upcoming command to perform the procedure comprising the reset of the protocol sublayer.

30. The mobile node of one of claims 26 to 29, wherein upon the processor detects the upcoming command to perform the procedure comprising the reset of the protocol sublayer, the processor waits for a pre-determined time to receive the command to perform the procedure comprising the reset of the protocol sublayer, and
wherein in case the pre-determined time elapses before a receiver in the mobile node receives the command to perform the procedure, the processor is adapted to re-start the segmentation of service data units of the protocol sublayer.

31. The mobile node of one of claims 26 to 30, wherein
the processor is adapted to determine whether the system resources of the protocol sublayer are sufficient or not for re-transmitting the unacknowledged protocol data units of the protocol sublayer to the access network,
in case the processor determines that the system resources are not sufficient, the transmitter is adapted to transmit a request message to the access network for requesting additional system resources,
a receiver is adapted to receive from the access network information on the granted additional system resources, and
the processor is adapted to utilize the granted additional system resources to re-transmit the unacknowledged protocol data units to the access network.

32. The mobile node of claim 31, wherein
the processor is adapted to determine the amount of data of the unacknowledged protocol data units of the protocol sublayer, and
the transmitter includes information on the determined amount of data.

33. The mobile node of one of claims 26 to 32, wherein each radio bearer, utilized for re-transmitting the unacknowledged protocol data units to the access network, is assigned a maximum amount of system resources, and wherein in case the maximum amount of system resources for each radio bearer is not sufficient to re-transmit all the unacknowledged protocol data units to the access network before the protocol sublayer is reset,
the transmitter is adapted to exceed the maximum amount of system resources for each radio bearer.

34. The mobile node of one of claims 26 to 33, wherein the procedure comprising the reset of the protocol sublayer is a handover procedure of the mobile node from a first base station to a second base station in the mobile communications system, and wherein the processor is adapted to detect the upcoming command to perform the handover procedure when it determines that measurements on the radio channel between the mobile node and the access network will trigger in the first base station the handover of the mobile node to the second base station.

35. The mobile node of one of claims 26 to 33, wherein the procedure comprising the reset of the protocol sublayer is a traffic redirection procedure for the mobile node from a first base station to a second base station in the mobile communications system, and wherein the processor is adapted to detect the upcoming command to perform the traffic redirection procedure when a receiver receives a pre-notification from the first base station about the decision in the first base station to perform the traffic redirection procedure for the mobile node,

36. The mobile node of one of claims 26 to 35 further comprising means to perform or participate in the steps of the method according to claims 9 to 16, 18, 19, 24 or 25.

37. A base station using a protocol sublayer for exchanging data with the respective protocol sublayer of a mobile node in a mobile communication system during a procedure comprising a reset of the protocol sublayer, the base station comprising:
a processor adapted to decide to perform the procedure comprising the reset of the protocol sublayer,
**characterized by**
a transmitter adapted to transmit a pre-notification to the mobile node for notifying the mobile node about the decision to perform the procedure, upon the processor performs the decision, and
a receiver adapted to receive unacknowledged protocol data units using the protocol sublayer, the unacknowledged protocol units being retransmitted by the mobile node in the response to the pre-notification.

38. The base station of claim 37 wherein the procedure comprising the reset of the protocol sublayer is a traffic redirection procedure or a handover procedure for the mobile node from the base station to another base station.

39. The base station of claims 37 or 38 further comprising:
a receiver adapted to receive a resource request message from the mobile node for requesting additional system resources needed for transmitting an amount of data, wherein the resource request message comprises information on the amount of data,
the processor further adapted to decide on an amount of system resources to be used for transmitting the amount of data, based on the received information in the resource request message, and
the transmitter is further adapted to transmit to the mobile node information about the decided amount of system resources.

40. The base station of claim 39, wherein the mobile node determines the amount of data comprised in the resource request message by:
determining the amount of data of unacknowledged protocol data units in the protocol sublayer of the mobile node, or by
determining the amount of data of the unacknowledged protocol data units of the protocol sublayer for each radio bearer that is used for transmitting the protocol data units to the base station, or by
determining the amount of data of the unacknowledged protocol data units of the protocol sublayer and the amount of data of service data units to which the unacknowledged protocol data units belong, wherein
the processor is further adapted to decide how the amount of data comprised in the resource request message is determined by the mobile node, and
the transmitter is further adapted to transmit a configuration message to the mobile node informing the mobile node about the decision on how the amount of data is to be determined by the mobile node.

41. The base station of claim 40, wherein the configuration message is the command message to perform the procedure comprising the reset of the protocol sublayer, or is a message transmitted from the base station to the mobile node to inform the mobile node on the establishment of radio bearers, or is a pre-notification message for notifying the mobile node about the decision to perform the procedure comprising the reset of the protocol sublayer.

42. The base station of one of claims 37 to 41 further comprising means to perform or participate in the steps of the method according to claims 1 to 25.

43. A communication system comprising a mobile node according to one of claims 26 to 36, and comprising a base station according to one of claims 37 to 42.

## Patentansprüche

1. Verfahren zum Übertragen von Daten von einem Mobilen Knoten über eine Protokoll-Teilschicht des Mobilen Knoten zu einem Zugangsnetz eines Mobilkommunikationssystems während einer Prozedur, die einen Reset der Protokoll-Teilschicht des Mobile Knoten umfasst, wobei das Verfahren durch die folgenden Schritte kennzeichnet ist:
wenn der kommende Befehl zum Durchführen der Prozedur, die den Reset der Protokoll-Teilschicht des Mobilen Knoten umfasst, im Voraus an dem Mobilen Knoten erfasst wird:
Unterbrechen der Segmentierung von Dienstdaten-Einheiten der Protokoll-Teilschicht in Protokoll-Dateneinheiten der Protokoll-Teilschicht, und
erneutes Übertragen nicht-quittierter Protokoll-Dateneinheiten zu dem Zugangsnetz durch die Protokoll-Teilschicht des Mobilen Knoten.

2. Verfahren nach Anspruch 1, wobei die erneute Übertragung nicht-quittierter Protokoll-Dateneinheiten zu dem Zugangsnetz nach dem Empfang des Befehls zum Durchführen der Prozedur, die den Reset der Protokoll-Teilschicht des Mobilen Knoten umfasst, fortgesetzt wird, bis der Mobile Knoten seine Verbundenheit zu dem Zugangsnetz ändert.

3. Verfahren nach einem der Ansprüche 1 bis 2, das des Weiteren die folgenden Schritte umfasst, die durchgeführt werden, bevor der kommende Befehl zum Durchführen der Prozedur erfasst wird, die den Reset der Protokoll-Teilschicht des Mobilen Knoten umfasst:
Segmentieren der Dienst-Dateneinheiten in Protokoll-Dateneinheiten der Protokoll-Teilschicht beim Empfangen der Dienst-Dateneinheiten von einer zweiten Protokoll-Teilschicht in der Protokoll-Teilschicht,
Eingeben der segmentierten Protokoll-Dateneinheiten der Protokoll-Teilschicht in einen Übertragungspuffer der Protokoll-Teilschicht, und
wobei der Schritt des erneuten Übertragens das erneute Übertragen der segmentierten Protokoll-Dateneinheiten in dem Übertragungspuffer der Protokoll-Teilschicht umfasst, die zu dem Zugangsnetz gesendet worden sind, jedoch von dem Zugangsnetz noch nicht-quittiert worden sind.

4. Verfahren nach Anspruch 3, wobei der Übertragungspuffer der Protokoll-Teilschicht des Mobilen Knoten des Weiteren segmentierte Protokoll-Dateneinheiten umfasst, die zum Zeitpunkt des Erfassens des kommenden Befehls zum Durchführen der Prozedur, die den Reset der Protokoll-Teilschicht umfasst, nicht zu dem Zugangsnetz übertragen worden sind, und das Verfahren des Weiteren den folgenden Schritt umfasst:
Übertragen der segmentierten Protokoll-Dateneinheiten, die nicht zu dem Zugangsnetz übertragen worden sind, zu dem Zugangsnetz durch die Protokoll-Teilschicht nach erneutem Übertragen aller nicht-quittierten Protokoll-Dateneinheiten in dem Übertragungspuffer zu dem Zugangsnetz.

5. Verfahren nach Anspruch 1 oder 2, wobei die Protokoll-Teilschicht eine RLC-Teilschicht (radio link control sublayer) ist und das Verfahren des Weiteren die folgenden Schritte umfasst:
Priorisieren der Übertragung von Protokoll-Dateneinheiten der RLC-Teilschicht, die zu dem Zugangsnetz übertragen worden sind, jedoch von dem Zugangsnetz nicht-quittiert worden sind, gegenüber der Übertragung von Protokoll-Dateneinheiten der RLC-Teilschicht, die zum Zeitpunkt des Erfassens des kommenden Befehls zum Durchführen der Prozedur, die den Reset der Protokoll-Teilschicht umfasst, nicht zu dem Zugangsnetz übertragen worden sind.

6. Verfahren nach einem der Ansprüche 1 bis 5, wobei beim Erfassen des kommenden Befehls zum Durchführen der Prozedur, die den Reset der Protokoll-Teilschicht des Mobilen Knoten umfasst, der Mobile Knoten eine vorgegebene Zeit auf den Empfang des Befehls zum Durchführen der Prozedur wartet, die den Reset der Protokoll-Teilschicht des Mobilen Knoten umfasst, und, wenn die vorgegebene Zeit vergeht, bevor der Mobile Knoten den Befehl zum Durchführen der Prozedur empfängt, die den Reset der Protokoll-Teilschicht des Mobilen Knoten umfasst, der Mobile Knoten die Segmentierung von Dienst-Dateneinheiten der Protokoll-Teilschicht in Protokoll-Dateneinheiten der Protokoll-Teilschicht erneut in Gang setzt.

7. Verfahren nach einem der Ansprüche 1 bis 6, wobei die Protokoll-Teilschicht des Mobilen Knoten über begrenzte Systemressourcen zum erneuten Übertragen der nicht-quittierten Protokoll-Dateneinheiten der Protokoll-Teilschicht zu dem Zugangsnetz verfügt und das Verfahren des Weiteren die folgenden Schritte umfasst:
Anfordern zusätzlicher Systemressourcen von dem Zugangsnetz durch den Mobilen Knoten, wenn die Systemressourcen des Mobilen Knoten nicht ausreichen, um die nicht-quittierten Protokoll-Dateneinheiten erneut zu übertragen,
Empfangen von Informationen über die zusätzlichen Systemressourcen von dem Zugangsnetz in dem Mobilen Knoten, und
Nutzen der zusätzlichen Systemressourcen zum erneuten Übertragen der nicht-quittierten Protokoll-Dateneinheiten zu dem Zugangsnetz.

8. Verfahren nach Anspruch 7, wobei der Schritt des Anforderns zusätzlicher Systemressourcen durch den Mobilen Knoten die folgenden Schritte umfasst:
Bestimmen der Datenmenge der nicht-quittierten Protokoll-Dateneinheiten der Protokoll-Teilschicht durch den Mobilen Knoten, und
Übertragen einer Anforderungsnachricht zu dem Zugangsnetz zum Anfordern zusätzlicher Systemressourcen, die Informationen über die bestimmte Datenmenge der nicht-quittierten Protokoll-Dateneinheiten umfasst.

9. Verfahren nach Anspruch 7, wobei der Schritt des Anforderns zusätzlicher Systemressourcen durch den Mobilen Knoten die folgenden Schritte umfasst:
Bestimmen der Datenmenge der nicht-quittierten Protokoll-Dateneinheiten der Protokoll-Teilschicht für jeden Funkträger, der zum Übertragen von Daten zu dem Zugangsnetz eingesetzt wird, durch den Mobilen Knoten, und
Übertragen einer Anforderungsnachricht zu dem Zugangsnetz zum Anfordern zusätzlicher Systemressourcen, die Informationen über die bestimmte Datenmenge der nicht-quittierten Protokoll-Dateneinheiten für jeden Funkträger umfasst.

10. Verfahren nach Anspruch 9, wobei jeder Funkträger eine Priorität hat und das Verfahren des Weiteren die folgenden Schritte umfasst:
Entscheiden über die für jeden Funkträger zu verwendende Menge an Systemressourcen auf Basis der Priorität jedes Funkträgers beim Empfangen der Anforderung zusätzlicher Systemressourcen von dem Mobilen Knoten, und
Informieren des Mobilen Knoten über die Menge an Systemressourcen für jeden Funkträger.

11. Verfahren nach Anspruch 7, wobei der Schritt des Anforderns zusätzlicher Systemressourcen durch den Mobilen Knoten die folgenden Schritte umfasst:
Bestimmen der Datenmenge der nicht-quittierten Protokoll-Dateneinheiten der Protokoll-Teilschicht und der Datenmenge der Dienst-Dateneinheiten, zu denen die nicht-quittierten Protokoll-Dateneinheiten gehören, durch den Mobilen Knoten, und
Übertragen einer Anforderungsnachricht zu dem Zugangsnetz zum Anfordern zusätzlicher Systemressourcen, die Informationen über die bestimmte Datenmenge der nicht-quittierten Protokoll-Dateneinheiten und die Datenmenge der Dienst-Dateneinheiten umfasst, zu denen die nicht-quittierten Protokoll-Dateneinheiten gehören.

12. Verfahren nach Anspruch 11, das des Weiteren die folgenden Schritte umfasst:
beim Empfangen der Anforderungsnachricht von dem Mobilen Knoten in einer Basisstation des Zugangsnetzes, Entscheiden über die zum erneuten Übertragen jeder der nicht-quittierten Protokoll-Dateneinheiten zu verwendende Menge an Systemressourcen auf Basis der empfangenen Informationen in der Anforderungsnachricht, und
Informieren des Mobilen Knoten über die Menge an Systemressourcen für jede Protokoll-Dateneinheit.

13. Verfahren nach Anspruch 8, 9 oder 11, das des Weiteren den folgenden Schritt umfasst:
Informieren des Mobilen Knoten darüber, ob die Verfahrensschritte nach Anspruch 8, Anspruch 9 oder Anspruch 11 verwendet werden.

14. Verfahren nach Anspruch 13, wobei der Schritt des Informierens des Mobilen Knoten die folgenden Schritte umfasst:
Entscheiden darüber, ob die Verfahrensschritte nach Anspruch 8, 9 oder 11 verwendet werden, während des Einrichtens mehrerer Funkträger für die Übertragung von Daten von dem Mobilen Knoten zu dem Zugangsnetz, und
Integrieren von Informationen über die Entscheidung in eine Nachricht, die von dem Zugangsnetz zu dem Mobilen Knoten gesendet wird, um den Mobilen Knoten über die Einrichtung der Funkträger zu informieren.

15. Verfahren nach Anspruch 13, wobei der Schritt des Informierens des Mobilen Knoten die folgenden Schritte umfasst:
Entscheiden darüber, ob die Verfahrensschritte nach Anspruch 8, 9 oder 11 verwendet werden, und
Integrieren von Informationen über die Entscheidung in den Befehl zum Durchführen der Prozedur, die den Reset der Protokoll-Teilschicht umfasst.

16. Verfahren nach Anspruch 13, wobei der Schritt des Informierens des Mobilen Knoten die folgenden Schritte umfasst:
Entscheiden, ob die Verfahrensschritte nach Anspruch 8, 9 oder 11 verwendet werden, und
Integrieren von Informationen über die Entscheidung in eine Vormitteilungs-Nachricht, mit der dem Mobile Node die Entscheidung zum Durchführen der Prozedur mitgeteilt wird, die den Reset der Protokoll-Teilschicht umfasst.

17. Verfahren nach einem der Ansprüche 1 bis 16, wobei jedem Funkträger, der zum erneuten Übertragen der nicht-quittierten Protokolldateneinheiten zu dem Zugangsnetz genutzt wird, eine maximale Menge an Systemressourcen zugewiesen wird, und das Verfahren des Weiteren die folgenden Schritte umfasst:
Überschreiten der maximalen Menge an Systemressourcen für jeden Funkträger durch den Mobilen Knoten, wenn die maximale Menge an Systemressourcen für jeden Funkträger nicht ausreicht, um die nicht-quittierten Protokoll-Dateneinheiten erneut zu dem Zugangsnetz zu übertragen, bevor der Reset der Protokoll-Teilschicht durchgeführt wird.

18. Verfahren nach einem der Ansprüche 1 bis 17, das die folgenden Schritte umfasst:
Zuweisen von Prioritäten zu jedem Funkträger durch den Mobilen Knoten auf Basis der verfügbaren Systemressourcen und/oder auf Basis von Informationen, die sich auf die nicht-quittierten Protokoll-Dateneinheiten beziehen, nachdem der Mobile Knoten den kommenden Befehl zum Durchführen der Prozedur erfasst, die den Reset der Protokoll-Teilschicht des Mobilen Knoten umfasst.

19. Verfahren nach einem der Ansprüche 1 bis 18, wobei die Protokoll-Teilschicht eine RLC-Teilschicht (radio link control sublayer) des Mobilen Knoten ist und die Dienst-Dateneinheiten der RLC-Teilschicht von der PDCP-Teilschicht (packet data convergence protocol sublayer) des Mobilen Knoten empfangen werden.

20. Verfahren nach einem der Ansprüche 1 bis 19, wobei die Prozedur, die den Reset der Protokoll-Teilschicht des Mobilen Knoten umfasst, eine Handover-Prozedur des Mobilen Knoten von einer ersten Basisstation zu einer zweiten Basisstation in dem Mobilkommunikationssystem ist.

21. Verfahren nach Anspruch 20, das die folgenden Schritte umfasst:
Durchführen von Messungen durch den Mobilen Knoten bezüglich Handover auf dem Funkkanal zwischen dem Mobilen Knoten und dem Zugangsnetz,
wobei der Mobile Knoten den kommenden Befehl zum Durchführen der Handover-Prozedur erfasst, wenn der Mobile Knoten feststellt, dass die Messungen in der ersten Basisstation einen Handover des Mobilen Knoten zu der zweiten Basisstation auslösen werden.

22. Verfahren nach einem der Ansprüche 1 bis 19, wobei die Prozedur, die den Reset der Protokoll-Teilschicht des Mobilen Knoten umfasst, eine Verkehrsumleitungs-Prozedur für den Mobilen Knoten von einer ersten Basisstation zu einer zweiten Basisstation in dem Mobilkommunikationssystem ist.

23. Verfahren nach Anspruch 22, das den folgenden Schritt umfasst:
Entscheiden darüber, ob die Verkehrsumleitungs-Prozedur durchgeführt wird, in der ersten Basisstation auf Basis der Verkehrslast in dem durch die erste Basisstation gesteuerten Netzwerkbereich, und
wobei der Mobile Knoten den kommenden Befehl zum Durchführen der Verkehrsumleitungs-Prozedur erfasst, indem er eine Vormitteilung von der ersten Basisstation empfängt, die dem Mobile Knoten die Entscheidung in der ersten Basisstation zum Durchführen der Verkehrsumleitungs-Prozedur für den Mobilen Knoten mitteilt.

24. Verfahren nach einem der Ansprüche 1 bis 23, wobei wenigstens ein Funkträger verwendet wird, um die Protokoll-Dateneinheiten von dem Mobilen Knoten zu dem Zugangsnetz zu übertragen, und jedem Funkträger eine Priorität zugewiesen worden ist, und wobei der Schritt des erneuten Übertragens der nicht-quittierten Protokoll-Dateneinheiten auf Basis der Priorität jedes Funkträgers durchgeführt wird.

25. Verfahren nach einem der Ansprüche 1 bis 24, wobei, wenn die Protokollschicht in einer Basisstation oder einem Zugangs-Gateway des Mobilkommunikationssystems abgeschlossen wird, mit dem Schritt des erneuten Übertragens die nicht-quittierten Protokoll-Dateneinheiten erneut zu der Basisstation oder dem Zugangs-Gateway übertragen werden.

26. Mobiler Knoten zum Übertragen von Protokolldateneinheiten einer Protokoll-Teilschicht zu einem Zugangsnetz eines Mobilkommunikationssystems während einer Prozedur, die einen Reset der Protokoll-Teilschicht des Mobilen Knoten umfasst, wobei der Mobile Knoten **gekennzeichnet ist durch**:
eine Verarbeitungseinrichtung, die so eingerichtet ist, dass sie im Voraus den kommenden Befehl zum Durchführen der Prozedur erfasst, die den Reset der Protokoll-Teilschicht des Mobilen Knoten umfasst,
wobei die Verarbeitungseinrichtung des Weiteren so eingerichtet ist, dass sie die Segmentierung von Dienst-Dateneinheiten der Protokoll-Teilschicht in Dienst-Dateneinheiten der Protokoll-Teilschicht unterbricht, wenn der kommende Befehl zum Durchführen der Prozedur erfasst wird, und
eine Übertragungseinrichtung, die so eingerichtet ist, dass sie nicht-quittierte Protokoll-Dateneinheiten der Protokoll-Teilschicht erneut zu dem Zugangsnetz überträgt, wenn der kommende Befehl zum Durchführen der Prozedur erfasst wird.

27. Mobiler Knoten nach Anspruch 26, wobei die Verarbeitungseinrichtung des Weiteren so eingerichtet ist, dass sie die erneute Übertragung der nicht-quittierten Protokoll-Dateneinheiten der Protokoll-Teilschicht nach dem Empfang des Befehls zum Durchführen der Prozedur fortsetzt, bis der Mobile Knoten seine Verbundenheit zu dem Zugangsnetz ändert.

28. Mobiler Knoten nach den Ansprüchen 26 oder 27, wobei ein Übertragungspuffer der Protokoll-Teilschicht nicht-quittierte Protokoll-Dateneinheiten und segmentierte Protokoll-Dateneinheiten umfasst, die zum Zeitpunkt des Erfassens des kommenden Befehls zum Durchführen der Prozedur, die den Reset der Protokoll-Teilschicht umfasst, nicht zu dem Zugangsnetz übertragen worden sind, und
die Übertragungseinrichtung so eingerichtet ist, dass sie die segmentierten Protokoll-Dateneinheiten, die nicht zu dem Zugangsnetz übertragen worden sind, nach erneutem Übertragen aller nicht-quittierten Protokoll-Dateneinheiten überträgt.

29. Mobiler Knoten nach einem der Ansprüche 26 bis 28, wobei die Verarbeitungseinrichtung des Weiteren so eingerichtet ist, dass sie die Übertragung von Protokoll-Dateneinheiten der Protokoll-Teilschicht, die zu dem Zugangsnetz übertragen worden sind, jedoch von dem Zugangsnetz nicht-quittiert worden sind, gegenüber der Übertragung von Protokoll-Dateneinheiten priorisiert, die beim Erfassen des kommenden Befehls zum Durchführen der Prozedur, die den Reset der Protokoll-Teilschicht umfasst, nicht zu dem Zugangsnetz übertragen worden sind.

30. Mobiler Knoten nach einem der Ansprüche 26 bis 29, wobei, wenn die Verarbeitungseinrichtung den kommenden Befehl zum Durchführen der Prozedur erfasst, die den Reset der Protokoll-Teilschicht umfasst, die Verarbeitungseinheit eine vorgegebene Zeit auf den Empfang des Befehls zum Durchführen der Prozedur wartet, die den Reset der Protokoll-Teilschicht umfasst, und
die Verarbeitungseinrichtung so eingerichtet ist, dass sie, wenn die vorgegebene Zeit vergeht, bevor eine Empfangseinrichtung in dem Mobilen Knoten den Befehl zum Durchführen der Prozedur empfängt, die Segmentierung von Dienst-Dateneinheiten der Protokoll-Teilschicht erneut in Gang setzt.

31. Mobiler Knoten nach einem der Ansprüche 26 bis 30, wobei
die Verarbeitungseinrichtung so eingerichtet ist, dass sie feststellt, ob die Systemressourcen der Protokoll-Teilschicht zum erneuten Übertragen der nicht-quittierten Protokoll-Dateneinheiten der Protokoll-Teilschicht zu dem Zugangsnetz ausreichen oder nicht,
die Übertragungseinrichtung so eingerichtet ist, dass sie, wenn die Verarbeitungseinrichtung feststellt, dass die Systemressourcen nicht ausreichen, eine Anforderungsnachricht zum Anfordern zusätzlicher Systemressourcen zu dem Zugangsnetz überträgt,
eine Empfangseinrichtung so eingerichtet ist, dass sie Informationen über die gewährten zusätzlichen Systemressourcen von dem Zugangsnetz empfängt, und
die Verarbeitungseinrichtung so eingerichtet ist, dass sie die gewährten zusätzlichen Systemressourcen nutzt, um die nicht-quittierten Protokoll-Dateneinheiten erneut zu dem Zugangsnetz zu übertragen.

32. Mobiler Knoten nach Anspruch 31, wobei
die Verarbeitungseinrichtung so eingerichtet ist, dass sie die Datenmenge der nicht-quittierten Protokoll-Dateneinheiten der Protokoll-Teilschicht bestimmt, und
die Übertragungseinrichtung Informationen über die bestimmte Datenmenge integriert.

33. Mobiler Knoten nach einem der Ansprüche 26 bis 32, wobei jedem Funkträger, der zum erneuten Übertragen der nicht-quittierten Protokoll-Dateneinheiten zu dem Zugangsnetz genutzt wird, eine maximale Menge an Systemressourcen zugewiesen wird, und wenn die maximale Menge an Systemressourcen für jeden Funkträger nicht ausreicht um alle nicht-quittierten Protokoll-Dateneinheiten erneut zu dem Zugangsnetz zu übertragen, bevor der Reset der Protokoll-Teilschicht durchgeführt wird,
die Übertragungseinrichtung so eingerichtet ist, dass sie die maximale Menge an Systemressourcen für jeden Funkträger überschreitet.

34. Mobiler Knoten nach einem der Ansprüche 26 bis 33, wobei die Prozedur, die den Reset der Protokoll-Teilschicht umfasst, eine Handover-Prozedur des Mobilen Knoten von einer ersten Basisstation zu einer zweiten Basisstation in dem Mobilkommunikationssystem ist, und die Verarbeitungseinrichtung so eingerichtet ist, dass sie den kommenden Befehlen zum Durchführen der Handover-Prozedur erfasst, wenn sie feststellt, dass Messungen auf dem Funkkanal zwischen dem Mobilen Knoten und dem Zugangsnetz in der ersten Basisstation den Handover des Mobilen Knoten zu der zweiten Basisstation auslösen werden.

35. Mobiler Knoten nach einem der Ansprüche 26 bis 33, wobei die Prozedur, die den Reset der Protokoll-Teilschicht umfasst, eine Verkehrsumleitungs-Prozedur für den Mobilen Knoten von einer ersten Basisstation zu einer zweiten Basisstation in dem Mobilkommunikationssystem ist, und die Verarbeitungseinrichtung so eingerichtet ist, dass sie den kommenden Befehl zum Durchführen der Verkehrsumleitungs-Prozedur erfasst, wenn eine Empfangseinrichtung eine Vormitteilung von der ersten Basisstation über die Entscheidung in der ersten Basisstation zum Durchführen der Verkehrsumleitungs-Prozedur für den Mobilen Knoten empfängt.

36. Mobiler Knoten nach einem der Ansprüche 26 bis 35, der des Weiteren eine Einrichtung zum Durchführen des Verfahrens nach den Ansprüchen 9 bis 16, 18, 19, 24 oder 25 oder zum Teilnehmen daran umfasst.

37. Basisstation, die eine Protokoll-Teilschicht zum Austauschen von Daten mit der jeweiligen Protokoll-Teilschicht eines Mobilen Knoten in einem Mobilkommunikationssystem während einer Prozedur verwendet, die einen Reset der Protokoll-Teilschicht umfasst, wobei die Basisstation umfasst:
eine Verarbeitungseinrichtung, die so eingerichtet ist, dass sie entscheidet, dass die Prozedur durchgeführt wird, die den Reset der Protokoll-Teilschicht umfasst,
**gekennzeichnet durch**
eine Übertragungseinrichtung, die so eingerichtet ist, dass sie eine Vormitteilung zu dem Mobilen Knoten überträgt, mit der der Mobile Knoten über die Entscheidung informiert wird, dass die Prozedur durchgeführt wird, wenn die Verarbeitungseinrichtung die Entscheidung trifft, und
eine Empfangseinrichtung, die so eingerichtet ist, dass sie nicht-quittierte Protokoll-Dateneinheiten unter Verwendung der Protokoll-Teilschicht empfängt, wobei die nicht-quittierten Protokoll-Einheiten **durch** den Mobilen Knoten in Reaktion auf die Vormitteilung übertragen werden.

38. Basisstation nach Anspruch 37, wobei die Prozedur, die den Reset der Protokoll-Teilschicht umfasst, eine Verkehrsumleitungs-Prozedur oder eine Handover-Prozedur für den Mobilen Knoten von der Basisstation zu einer anderen Basisstation ist.

39. Basisstation nach den Ansprüchen 37 oder 38, die des Weiteren umfasst:
eine Empfangseinrichtung, die so eingerichtet ist, dass sie eine Ressourcen-Anforderungsnachricht zum Anfordern zusätzlicher Systemressourcen, die zum Übertragen einer Datenmenge benötigt werden, von dem Mobilen Knoten empfängt, wobei die Ressourcen-Anforderungsnachricht Informationen über die Datenmenge umfasst,
die Verarbeitungseinrichtung des Weiteren so eingerichtet ist, dass sie über eine zum Übertragen der Datenmenge zu verwendende Menge an Systemressourcen auf Basis der empfangenen Information in der Ressourcen-Anforderungsnachricht entscheidet, und
die Übertragungseinrichtung des Weiteren so eingerichtet ist, dass sie Informationen über die entschiedene Menge an Systemressourcen zu dem Mobilen Knoten überträgt.

40. Basisstation nach Anspruch 39, wobei der Mobile Knoten die in der Ressourcen-Anforderungsnachricht enthaltene Datenmenge bestimmt, indem er:
die Datenmenge nicht-quittierter Protokoll-Dateneinheiten in der Protokoll-Teilschicht des Mobilen Knoten bestimmt, oder indem er
die Datenmenge der nicht-quittierten Protokoll-Dateneinheiten der Protokoll-Teilschicht für jeden Funkträger bestimmt, der zum Übertragen der Protokoll-Dateneinheiten zu der Basisstation verwendet wird, oder, indem er
die Datenmenge der nicht-quittierten Protokoll-Dateneinheiten der Protokoll-Teilschicht und die Datenmenge der Dienst-Dateneinheiten bestimmt, zu denen die nicht-quittierten Protokoll-Dateneinheiten gehören, wobei
die Verarbeitungseinrichtung des Weiteren so eingerichtet ist, dass sie darüber entscheidet, wie die in der Ressourcen-Anforderungsnachricht enthaltene Datenmenge durch den Mobilen Knoten bestimmt wird, und
die Übertragungseinrichtung des Weiteren so eingerichtet ist, dass sie eine Konfigurationsnachricht zu dem Mobilen Knoten überträgt, die den Mobilen Knoten über die Entscheidung darüber informiert, wie die Datenmenge durch den Mobilen Knoten zu bestimmen ist.

41. Basisstation nach Anspruch 40, wobei die Konfigurationsnachricht die Befehls-Nachricht zum Durchführen der Prozedur ist, die den Reset der Protokoll-Teilschicht umfasst, oder eine Nachricht ist, die von der Basisstation zu dem Mobilen Knoten übertragen wird, um den Mobilen Knoten über die Einrichtung mehrerer Funkträger zu informieren, oder eine Vormitteilungs-Nachricht ist, mit der dem Mobilen Knoten die Entscheidung zum Durchführen der Prozedur mitgeteilt wird, die den Reset der Protokoll-Teilschicht umfasst.

42. Basisstation nach einem der Ansprüche 37 bis 41, die des Weiteren Einrichtungen zum Durchführen der Schritte des Verfahrens nach den Ansprüchen 1 bis 25 oder zum Teilnehmen daran umfasst.

43. Kommunikationssystem, das einen Mobilen Knoten nach einem der Ansprüche 26 bis 36 umfasst und eine Basisstation nach einem der Ansprüche 37 bis 42 umfasst.

## Revendications

1. Procédé pour transmettre des données à partir d'un noeud mobile via une sous-couche protocolaire du noeud mobile à un réseau d'accès d'un système de communication mobile durant une procédure comprenant une réinitialisation de la sous-couche protocolaire du noeud mobile, le procédé étant
**caractérisé par les étapes consistant à :**
lors de la détection préalable au noeud mobile du prochain ordre d'exécution de la procédure comprenant la réinitialisation de la sous-couche protocolaire du noeud mobile,
arrêter la segmentation d'unités de données de service de la sous-couche protocolaire en unités de données de protocole de la sous-couche protocolaire, et
retransmettre, par la sous-couche protocolaire du noeud mobile, des unités de données de protocole non reconnues au réseau d'accès.

2. Procédé selon la revendication 1, dans lequel la retransmission d'unités de données de protocole non reconnues au réseau d'accès se poursuit après la réception de la commande d'exécution de la procédure comprenant la réinitialisation de la sous-couche protocolaire du noeud mobile jusqu'à ce que le noeud mobile change sa fixation au réseau d'accès.

3. Procédé selon l'une des revendications 1 ou 2, comprenant en outre les étapes, effectuées avant détection du prochain ordre d'exécution de la procédure comprenant la réinitialisation de la sous-couche protocolaire du noeud mobile, consistant à :
lors de la réception des unités de données de service provenant d'une seconde sous-couche protocolaire dans la sous-couche protocolaire, segmenter les unités de données de service en unités de données de protocole de la sous-couche protocolaire,
saisir les unités de données de protocole segmentées de la sous-couche protocolaire dans un tampon de transmission de la sous-couche protocolaire, et
dans lequel l'étape de retransmission comprend la retransmission, dans le tampon de transmission de la sous-couche protocolaire, des unités de données de protocole segmentées qui ont été transmises au réseau d'accès mais n'ont pas été reconnues par le réseau d'accès.

4. Procédé selon la revendication 3, dans lequel le tampon de transmission de la sous-couche protocolaire du noeud mobile comprend en outre des unités de données de protocole segmentées qui n'ont pas été transmises au réseau d'accès au moment de la détection du prochain ordre d'exécution de la procédure comprenant la réinitialisation de la sous-couche protocolaire, le procédé comprend en outre l'étape consistant à :
après retransmission de toutes les unités de données de protocole non reconnues dans le tampon de transmission au réseau d'accès, transmettre au réseau d'accès, par la sous-couche protocolaire, les unités de données de protocole segmentées qui n'ont pas été transmises au réseau d'accès.

5. Procédé selon la revendication 1 ou 2, dans lequel la sous-couche protocolaire est une sous-couche de contrôle de liaison radio, comprenant en outre les étapes consistant à :
accorder une priorité à la transmission d'unités de données de protocole de la sous-couche de contrôle de liaison radio qui ont été transmises au réseau d'accès mais n'ont pas été reconnues par le réseau d'accès supérieure à celle de la transmission d'unités de données de protocole de la sous-couche de contrôle de liaison radio qui n'ont pas été transmises au réseau d'accès au moment de la détection du prochain ordre d'exécution de la procédure comprenant la réinitialisation de la sous-couche protocolaire.

6. Procédé selon l'une des revendications 1 à 5 dans lequel, lors de la détection du prochain ordre d'exécution de la procédure comprenant la réinitialisation de la sous-couche protocolaire du noeud mobile, le noeud mobile attend un temps prédéterminé pour recevoir l'ordre d'exécuter la procédure comprenant la réinitialisation de la sous-couche protocolaire du noeud mobile, et dans le cas où le temps prédéterminé s'écoule avant que le noeud mobile ne reçoive l'ordre d'exécuter la procédure comprenant la réinitialisation de la sous-couche protocolaire du noeud mobile, le noeud mobile redémarre la segmentation des unités de données de service de la sous-couche protocolaire en unités de données de protocole de la sous-couche protocolaire.

7. Procédé selon l'une des revendications 1 à 6, dans lequel la sous-couche protocolaire du noeud mobile possède des ressources système limitées pour retransmettre les unités de données de protocole non reconnues de la sous-couche protocolaire au réseau d'accès, le procédé comprenant en outre les étapes consistant à :
au cas où les ressources système du noeud mobile ne sont pas suffisantes pour retransmettre les unités de données de protocole non reconnues, demander par le noeud mobile des ressources système supplémentaires au réseau d'accès,
recevoir du réseau d'accès dans le noeud mobile des informations sur les ressources système supplémentaires, et utiliser les ressources système supplémentaires pour retransmettre au réseau d'accès les unités de données de protocole non reconnues.

8. Procédé selon la revendication 7, dans lequel l'étape de demande, par le noeud mobile, de ressources système supplémentaires comprend les étapes consistant à :
déterminer, par le noeud mobile, la quantité de données des unités de données de protocole non reconnues de la sous-couche protocolaire, et
transmettre un message de demande au réseau d'accès pour demander des ressources système supplémentaires, comprenant des informations sur la quantité déterminée de données des unités de données de protocole non reconnues.

9. Procédé selon la revendication 7, dans lequel l'étape de demande, par le noeud mobile, de ressources système supplémentaires comprend les étapes consistant à :
déterminer, par le noeud mobile, la quantité de données des unités de données de protocole non reconnues de la sous-couche protocolaire pour chaque porteuse radio utilisée pour transmettre des données au réseau d'accès, et
transmettre un message de demande au réseau d'accès pour demander des ressources système supplémentaires, comprenant des informations sur la quantité déterminée de données des unités de données de protocole non reconnues pour chaque porteuse radio.

10. Procédé selon la revendication 9, dans lequel chaque porteuse radio possède une priorité, et le procédé comprend en outre les étapes consistant à :
lors de la réception de la demande de ressources système supplémentaires par le noeud mobile, décider la quantité de ressources système à utiliser pour chaque porteuse radio selon la priorité de chaque porteuse radio, et
informer le noeud mobile de la quantité de ressources système pour chaque porteuse radio.

11. Procédé selon la revendication 7, dans lequel l'étape de demande de ressources système supplémentaires par le noeud mobile comprend les étapes consistant à :
déterminer, par le noeud mobile, la quantité de données des unités de données de protocole non reconnues de la sous-couche protocolaire et la quantité de données des unités de données de service auxquelles les unités de données de protocole non reconnues appartiennent, et
transmettre un message de demande au réseau d'accès pour demander des ressources système supplémentaires, comprenant des informations sur la quantité déterminée de données des unités de données de protocole non reconnues et sur la quantité de données des unités de données de service auxquelles les unités de données de protocole non reconnues appartiennent.

12. Procédé selon la revendication 11, comprenant en outre les étapes consistant à :
lors de la réception du message de demande provenant du noeud mobile dans une station de base du réseau d'accès, décider la quantité de ressources système à utiliser pour retransmettre chacune des unités de données de protocole non reconnues, selon les informations reçues dans le message de demande, et
informer le noeud mobile de la quantité de ressources système pour chaque unité de données de protocole.

13. Procédé selon la revendication 8, 9 ou 11, comprenant en outre l'étape consistant à :
informer le noeud mobile d'utiliser ou non les étapes du procédé selon la revendication 8, 9 ou 11.

14. Procédé selon la revendication 13, dans lequel l'étape d'information du noeud mobile comprend les étapes consistant à :
pendant l'établissement de porteuses radio pour la transmission de données à partir du noeud mobile vers le réseau d'accès, décider d'utiliser ou non les étapes du procédé selon la revendication 8, 9 ou 11, et
inclure des informations sur la décision dans un message transmis à partir du réseau d'accès vers le noeud mobile pour informer le noeud mobile de l'établissement des porteuses radio.

15. Procédé selon la revendication 13, dans lequel l'étape d'information du noeud mobile comprend les étapes consistant à :
décider d'utiliser ou non les étapes du procédé selon la revendication 8, 9 ou 11, et inclure des informations sur la décision dans l'ordre d'exécution de la procédure comprenant la réinitialisation de la sous-couche protocolaire.

16. Procédé selon la revendication 13, dans lequel l'étape d'information du noeud mobile comprend les étapes consistant à :
décider d'utiliser ou non les étapes du procédé selon la revendication 8, 9 ou 11, et
inclure des informations sur la décision dans un message de notification préalable pour notifier le noeud mobile de la décision d'exécution de la procédure comprenant la réinitialisation de la sous-couche protocolaire.

17. Procédé selon l'une des revendications 1 à 16, dans lequel une quantité maximale de ressources système est attribuée à chaque porteuse radio utilisée pour retransmettre les unités de données de protocole non reconnues au réseau d'accès, et le procédé comprend en outre les étapes consistant à :
dans le cas où la quantité maximale de ressources système n'est pas suffisante pour chaque porteuse radio de manière à retransmettre toutes les unités de données de protocole non reconnues au réseau d'accès avant que la sous-couche protocolaire ne soit réinitialisée, dépasser par le noeud mobile la quantité maximale de ressources système pour chaque porteuse radio.

18. Procédé selon l'une des revendications 1 à 17, comprenant les étapes consistant à :
après que le noeud mobile détecte le prochain ordre d'exécution de la procédure comprenant la réinitialisation de la sous-couche protocolaire du noeud mobile, attribuer par le noeud mobile des priorités à chaque porteuse radio, selon les ressources système disponibles et/ou selon des informations concernant les unités de données de protocole non reconnues.

19. Procédé selon l'une des revendications 1 à 18, dans lequel la sous-couche protocolaire est une sous-couche de contrôle de liaison radio du noeud mobile, et les unités de données de service de la sous-couche de contrôle de liaison radio sont reçues à partir de la sous-couche protocolaire de convergence de paquets de données du noeud mobile.

20. Procédé selon l'une des revendications 1 à 19, dans lequel la procédure comprenant la réinitialisation de la sous-couche protocolaire du noeud mobile est une procédure de transfert du noeud mobile à partir d'une première station de base vers une seconde station de base dans un système de communication mobile.

21. Procédé selon la revendication 20, comprenant les étapes consistant à :
effectuer par le noeud mobile des mesures relatives au transfert sur le canal radio entre le noeud mobile et le réseau d'accès,
dans lequel le noeud mobile détecte le prochain ordre d'exécution de la procédure de transfert dans le cas où le noeud mobile détermine que les mesures vont déclencher dans la première station de base un transfert du noeud mobile vers la seconde station de base.

22. Procédé selon l'une des revendications 1 à 19, dans lequel la procédure comprenant la réinitialisation de la sous-couche protocolaire du noeud mobile est une procédure de redirection de trafic pour le noeud mobile à partir d'une première station de base vers une seconde station de base dans le système de communication mobile.

23. Procédé selon la revendication 22, comprenant l'étape consistant à :
décider dans la première station de base d'exécuter ou non la procédure de redirection de trafic en se basant sur la charge de trafic dans la zone du réseau contrôlée par la première station de base, et
dans lequel le noeud mobile détecte le prochain ordre d'exécution de la procédure de redirection de trafic en recevant une notification préalable de la première station de base, notifiant le noeud mobile de la décision au niveau de la première station de base d'exécuter la procédure de redirection de trafic pour le noeud mobile.

24. Procédé selon l'une des revendications 1 à 23, dans lequel au moins une porteuse radio est utilisée pour transmettre les unités de données de protocole à partir du noeud mobile vers le réseau d'accès, dans lequel à chaque porteuse radio a été attribué une priorité, et dans lequel l'étape de retransmission des unités de données de protocole non reconnues est effectuée en fonction de la priorité de chaque porteuse radio.

25. Procédé selon l'une des revendications 1 à 24 dans lequel, lorsque la couche protocolaire est interrompue dans une station de base ou une passerelle d'accès du système de communication mobile, l'étape de retransmission retransmet les unités de données de protocole non reconnues à la station de base ou à la passerelle d'accès.

26. Noeud mobile pour la transmission d'unités de données de protocole d'une sous-couche protocolaire à un réseau d'accès d'un système de communication mobile lors d'une procédure comprenant une réinitialisation de la sous-couche protocolaire du noeud mobile, dans lequel le noeud mobile est
**caractérisé par :**
un processeur adapté pour détecter à l'avance le prochain ordre d'exécution de la procédure comprenant la réinitialisation de la sous-couche protocolaire du noeud mobile,
le processeur étant en outre adapté pour interrompre la segmentation d'unités de données de service de la sous-couche protocolaire en unités de données de service de la sous-couche protocolaire, lors de la détection du prochain ordre d'exécution de la procédure, et
un transmetteur adapté pour retransmettre des unités de données de protocole non reconnues de la sous-couche protocolaire vers le réseau d'accès, lors de la détection du prochain ordre d'exécution de la procédure.

27. Noeud mobile selon la revendication 26, dans lequel le processeur est en outre adapté pour poursuivre la retransmission des unités de données de protocole non reconnues de la sous-couche protocolaire après réception de l'ordre d'exécution de la procédure jusqu'à ce que le noeud mobile modifie sa fixation au réseau d'accès.

28. Noeud mobile selon la revendication 26 ou 27, dans lequel un tampon de transmission de la sous-couche protocolaire comprend des unités de données de protocole non reconnues et des unités de données de protocole segmentées qui n'ont pas été transmises au réseau d'accès au moment de la détection du prochain ordre d'exécution de la procédure comprenant la réinitialisation de la sous-couche protocolaire, et
le transmetteur est adapté pour transmettre les unités de données de protocole segmentées qui n'ont pas été transmises au réseau d'accès, après retransmission de toutes les unités de données de protocole non reconnues.

29. Noeud mobile selon l'une des revendications 26 à 28, dans lequel le processeur est en outre adapté pour accorder une priorité à la transmission d'unités de données de protocole de la sous-couche protocolaire, qui ont été transmises au réseau d'accès mais n'ont pas été reconnues par le réseau d'accès, supérieure à celle de la transmission d'unités de données de protocole, qui n'ont pas été transmises au réseau d'accès au moment de la détection du prochain ordre d'exécution de la procédure comprenant la réinitialisation de la sous-couche protocolaire.

30. Noeud mobile selon l'une des revendications 26 à 29 dans lequel, lorsque le processeur détecte le prochain ordre d'exécution de la procédure comprenant la réinitialisation de la sous-couche protocolaire, le processeur attend un temps prédéterminé pour recevoir l'ordre d'exécution de la procédure comprenant la réinitialisation de la sous-couche protocolaire, et
dans lequel, lorsque le temps prédéterminé s'écoule avant qu'un récepteur dans le noeud mobile ne reçoive l'ordre d'exécuter la procédure, le processeur est adapté pour redémarrer la segmentation d'unités de données de service de la sous-couche protocolaire.

31. Noeud mobile selon l'une des revendications 26 à 30, dans lequel
le processeur est adapté pour déterminer si les ressources système de la sous-couche protocolaire sont suffisantes ou non pour retransmettre au réseau d'accès les unités de données de protocole non reconnues de la sous-couche protocolaire,
dans le cas où le processeur détermine que les ressources système ne sont pas suffisantes, le transmetteur est adapté pour transmettre un message de demande au réseau d'accès pour demander des ressources système supplémentaires,
un récepteur est adapté pour recevoir du réseau d'accès des informations sur les ressources système supplémentaires accordées, et
le processeur est adapté pour utiliser les ressources système supplémentaires accordées pour retransmettre les unités de données de protocole non reconnues au réseau d'accès.

32. Noeud mobile selon la revendication 31, dans lequel
le processeur est adapté pour déterminer la quantité de données des unités de données de protocole non reconnues de la sous-couche protocolaire, et
le transmetteur intègre des informations sur la quantité déterminée de données.

33. Noeud mobile selon l'une des revendications 26 à 32, dans lequel à chaque porteuse radio utilisée pour retransmettre les unités de données de protocole non reconnues vers le réseau d'accès est attribuée une quantité maximale de ressources système, et dans lequel, lorsque la quantité maximale de ressources système pour chaque porteuse radio n'est pas suffisante pour retransmettre toutes les unités de données de protocole non reconnues au réseau d'accès avant que la sous-couche protocolaire ne soit réinitialisée,
le transmetteur est adapté pour dépasser la quantité maximale de ressources système pour chaque porteuse radio.

34. Noeud mobile selon l'une des revindications 26 à 33, dans lequel la procédure comprenant la réinitialisation de la sous-couche protocolaire est une procédure de transfert du noeud mobile à partir d'une première station de base vers une seconde station de base dans le système de communication mobile, et dans lequel le processeur est adapté pour détecter le prochain ordre d'exécution de la procédure de transfert lorsqu'il détermine que des mesures sur le canal radio entre le noeud mobile et le réseau d'accès déclencheront dans la première station de base le transfert du noeud mobile vers la seconde station de base.

35. Noeud mobile selon l'une des revendications 26 à 33, dans lequel la procédure comprenant la réinitialisation de la sous-couche protocolaire est une procédure de redirection de trafic pour le noeud mobile d'une première station de base vers une seconde station de base dans le système de communication mobile, et dans lequel le processeur est adapté pour détecter le prochain ordre d'exécution de la procédure de redirection de trafic lorsqu'un récepteur reçoit une notification préalable de la première station de base concernant la décision dans la première station de base d'exécuter la procédure de redirection de trafic pour le noeud mobile.

36. Noeud mobile selon l'une des revendications 26 à 35, comprenant en outre un moyen d'effectuer ou de participer dans les étapes du procédé selon les revendications 9 à 16, 18, 19, 24 ou 25.

37. Station de base utilisant une sous-couche protocolaire pour échanger des données avec la sous-couche protocolaire respective d'un noeud mobile dans un système de communication mobile durant une procédure comprenant une réinitialisation de la sous-couche protocolaire, la station de base comprenant :
un processeur adapté pour décider d'exécuter la procédure comprenant la réinitialisation de la sous-couche protocolaire,
**caractérisée par**
un transmetteur adapté pour transmettre une notification préalable au noeud mobile pour notifier le noeud mobile de la décision d'exécuter la procédure, lorsque le processeur effectue la décision, et
un récepteur adapté pour recevoir des unités de données de protocole non reconnues utilisant la sous-couche protocolaire, les unités de protocole non reconnues étant retransmises par le noeud mobile en réponse à la notification préalable.

38. Station de base selon la revendication 37, dans laquelle la procédure comprenant la réinitialisation de la sous-couche protocolaire est une procédure de redirection de trafic ou une procédure de transfert pour le noeud mobile à partir de la station de base vers une autre station de base.

39. Station de base selon la revendication 37 ou 38, dans laquelle en outre :
un récepteur est adapté pour recevoir un message de demande de ressource à partir d'un noeud mobile pour demander des ressources système supplémentaires nécessaires afin de transmettre une quantité de données, dans laquelle le message de demande de ressource comprend des informations sur la quantité de données,
le processeur est adapté pour décider une quantité de ressources système à utiliser pour transmettre la quantité de données, selon les informations reçues dans le message de demande de ressource, et
le transmetteur est adapté pour transmettre au noeud mobile des informations sur la quantité décidée de ressources système.

40. Station de base selon la revendication 39, dans laquelle le noeud mobile détermine la quantité de données comprises dans le message de demande de ressource en :
déterminant la quantité de données d'unités de données de protocole non reconnues dans la sous-couche protocolaire du noeud mobile, ou en
déterminant la quantité de données des unités de données de protocole non reconnues de la sous-couche protocolaire pour chaque porteuse radio utilisée pour transmettre les unités de données de protocole à la station de base, ou en
déterminant la quantité de données des unités de données de protocole non reconnues de la sous-couche protocolaire et la quantité de données des unités de données de service auxquelles les unités de données de protocole non reconnues appartiennent, dans laquelle
le processeur est en outre adapté pour décider comment la quantité de données comprises dans le message de demande de ressource est déterminée par le noeud mobile, et
le transmetteur est en outre adapté pour transmettre un message de configuration au noeud mobile, informant le noeud mobile de la décision quant à la manière dont la quantité de données doit être déterminée par le noeud mobile.

41. Station de base selon la revendication 40, dans laquelle le message de configuration est le message qui ordonne l'exécution de la procédure comprenant la réinitialisation de la sous-couche protocolaire, ou est un message transmis de la station de base au noeud mobile pour informer le noeud mobile de l'établissement de porteuses radio, ou est un message de notification préalable pour notifier le noeud mobile de la décision d'exécuter la procédure comprenant la réinitialisation de la sous-couche protocolaire.

42. Station de base selon l'une des revendications 37 à 41, comprenant en outre un moyen pour effectuer ou participer dans les étapes du procédé selon les revendications 1 à 25.

43. Système de communication comprenant un noeud mobile selon l'une des revendications 26 à 36, et comprenant une station de base selon l'une des revendications 37 à 42.
